(19) Europäisches Patentamt / European Patent Office / Office européen des brevets

(11) **EP 2 553 927 B1**

(12) **FASCICULE DE BREVET EUROPEEN**

(45) Date de publication et mention de la délivrance du brevet:
**28.11.2018 Bulletin 2018/48**

(21) Numéro de dépôt: **11718431.7**

(22) Date de dépôt: **29.03.2011**

(51) Int Cl.:
*H04N 19/52* (2014.01)     *H04N 19/70* (2014.01)
*H04N 19/61* (2014.01)     *H04N 19/553* (2014.01)
*H04N 19/57* (2014.01)     *H04N 19/583* (2014.01)

(86) Numéro de dépôt international:
**PCT/FR2011/050687**

(87) Numéro de publication internationale:
**WO 2011/121227 (06.10.2011 Gazette 2011/40)**

(54) **PROCEDES ET DISPOSITIFS DE CODAGE ET DE DECODAGE D'UNE SEQUENCE D'IMAGES METTANT EN OEUVRE UNE PREDICTION PAR COMPENSATION DE MOUVEMENT AVANT, ET PROGRAMME D'ORDINATEUR CORRESPONDANT**

VERFAHREN UND VORRICHTUNGEN MIT VORHERSAGEIMPLEMENTIERUNG DURCH VORWÄRTSBEWEGUNGSKOMPENSATION ZUR CODIERUNG UND DECODIERUNG EINER BILDSEQUENZ SOWIE ZUGEHÖRIGES COMPUTERPROGRAMM

METHODS AND DEVICES FOR ENCODING AND DECODING AN IMAGE SEQUENCE, WHICH IMPLEMENT PREDICTION BY FORWARD MOTION COMPENSATION, AND CORRESPONDING COMPUTER PROGRAM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.03.2010 FR 1052440**

(43) Date de publication de la demande:
**06.02.2013 Bulletin 2013/06**

(73) Titulaire: **Orange**
**75015 Paris (FR)**

(72) Inventeurs:
• **Amonou, Isabelle**
  **F-35510 Cesson Sevigne (FR)**
• **Pateux, Stéphane**
  **F-35700 Rennes (FR)**
• **Cammas, Nathalie**
  **F-35490 Sens De Bretagne (FR)**

(74) Mandataire: **Vidon Brevets & Stratégie**
**16B, rue de Jouanet**
**BP 90333**
**35703 Rennes Cedex 7 (FR)**

(56) Documents cités:
**WO-A1-03/085599     WO-A1-2006/012428**

US-A1- 2009 060 041

• MIN LI ET AL: "An Entire Frame Loss Recovery Algorithm for H.264/AVC over Wireless Networks", IEEE INTERNATIONAL CONFERENCE ON WIRELESS COMMUNICATIONS, NETWORKING AND MOBILE COMPUTING, 24 septembre 2009 (2009-09-24), pages 1-4, XP031554943, ISBN: 978-1-4244-3692-7
• BYEONG-DOO CHOI ET AL: "Motion-Compensated Frame Interpolation Using Bilateral Motion Estimation and Adaptive Overlapped Block Motion Compensation", IEEE TRANSACTIONS ON CIRCUITS AND SYSTEMS FOR VIDEO TECHNOLOGY, IEEE SERVICE CENTER, PISCATAWAY, NJ, US, vol. 16, no. 4, 1 avril 2007 (2007-04-01), pages 407-416, XP011179771, ISSN: 1051-8215
• XIANGYANG JI ET AL: "Enhanced direct mode coding for bi-predictive pictures", INTERNATIONAL SYMPOSIUM ON CIRCUITS AND SYSTEMS, 23 mai 2004 (2004-05-23), pages III-785, XP010719382, ISBN: 978-0-7803-8251-0

• DA LIU ET AL: "Direct Mode Coding for B Pictures using Virtual Reference Picture", IEEE INTERNATIONAL CONFERENCE ON MULTIMEDIA AND EXPO, 1 juillet 2007 (2007-07-01), pages 1363-1366, XP031123887, ISBN: 978-1-4244-1016-3

## Description

### 1. Domaine de l'invention

Le domaine de l'invention est celui du codage et du décodage d'images, et notamment d'un flux vidéo constitué d'une série d'images successives.

Plus précisément, l'invention concerne les techniques de prédiction mettant en oeuvre une compensation de mouvement avant.

L'invention peut notamment s'appliquer au codage vidéo mis en oeuvre dans les codeurs vidéo actuels (MPEG, H.264, etc) ou à venir (ITU-T/VCEG (H.265) ou ISO/MPEG (HVC)).

### 2. Art antérieur

On décrit ci-après l'art antérieur relatif à la prédiction d'images dans le domaine du codage ou du décodage de séquences d'images utilisant une représentation par blocs des images. Ainsi, selon la technique H.264 par exemple, chaque image peut être découpée en macroblocs, qui sont ensuite subdivisés en blocs. Un bloc est constitué d'un ensemble de points ou pixels.

Plus précisément, le standard de codage AVC définit un mode de codage par bloc appelé le mode « direct temporel » (ou « temporal direct » en anglais). Ce mode de codage dérive l'information de mouvement d'un bloc d'une image courante à prédire à partir d'un bloc co-localisé dans une image de référence. Les vecteurs de mouvement sont mis à l'échelle pour que l'amplitude du déplacement caractérisé par le vecteur de mouvement dans l'image courante soit proportionnelle à l'amplitude du mouvement dans l'image de référence et de la distance temporelle entre l'image de référence et l'image courante.

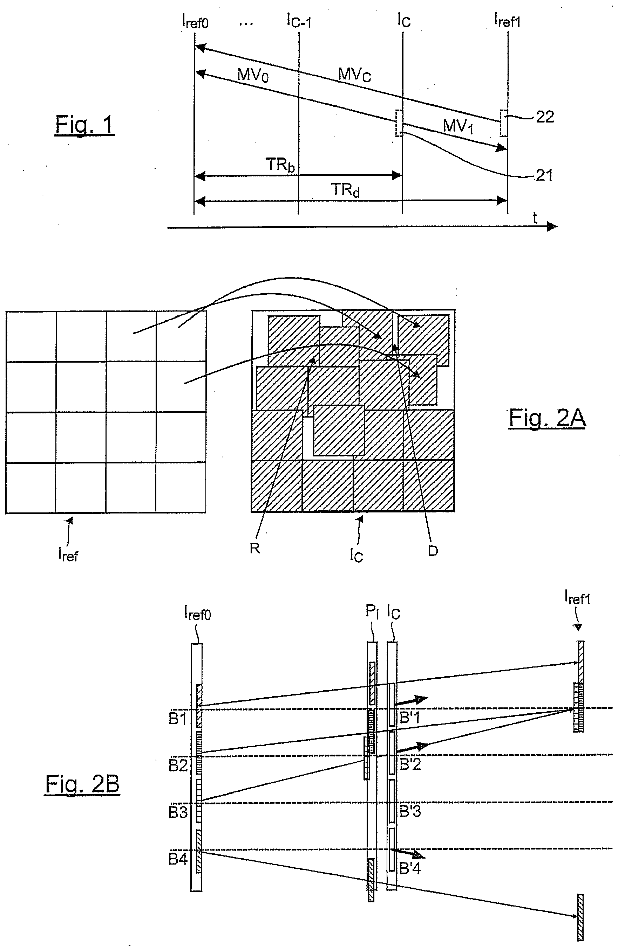

La figure 1 illustre, à titre d'exemple, ce mode de codage pour une image à prédire Ic de type B : l'information de mouvement d'un bloc 21 de l'image à prédire Ic, dit bloc courant, est obtenu à partir du bloc co-localisé 22 dans l'image de référence Iref1.

Pour une image de type B, il est possible de définir une prédiction bi-directionnelle du bloc courant 21 de l'image à prédire Ic à l'aide d'une double compensation de mouvement effectuée avec le vecteur de mouvement $MV_1$ et l'image de référence avant Iref1 d'une part (« forward reference ») et le vecteur de mouvement $MV_0$ et l'image de référence arrière Iref0 d'autre part (« backward reference »). Les vecteurs de mouvement $MV_0$ et $MV_1$ sont dérivés tous les deux du vecteur de mouvement $MV_C$ du bloc co-localisé 22 dans l'image de référence avant Iref1, par rapport à l'image de référence arrière Iref0, et selon les équations suivantes pour la mise à l'échelle des vecteurs de mouvement dans l'image à prédire Ic :

$$MV_0 = \frac{TR_b}{TR_d} \times MV_C$$

$$MV_1 = \frac{TR_b - TR_d}{TR_d} \times MV_C$$

avec : $TR_b$ la distance temporelle entre l'image de référence arrière Iref0 et l'image à prédire Ic ; et

$TR_d$ la distance temporelle entre l'image de référence arrière Iref0 et l'image de référence avant Iref1.

Cette technique permet de limiter le coût de codage de mouvement dans une image mettant en oeuvre ce mode de codage pour certains blocs, car l'information de mouvement ainsi dérivée n'a pas à être codée.

Cependant, la manière de dériver l'information de mouvement ne représente pas la trajectoire de mouvement réelle du bloc courant, mais utilise la trajectoire de mouvement d'un bloc co-localisé dans une image de référence. Or cette trajectoire du bloc co-localisé peut être différente de la trajectoire du bloc courant de l'image à prédire. Lors du codage du bloc courant, la prédiction par compensation de mouvement n'est alors pas optimale, car elle n'utilise pas les informations de texture correspondant à la trajectoire réelle du bloc courant, mais à une trajectoire approximative.

Pour remédier à cet inconvénient, une technique connue est de projeter en avant le mouvement des blocs de l'image de référence sur l'image courante. Une telle technique est appelée « compensation de mouvement avant » (« forward motion compensation » en anglais) et est décrite par exemple dans le document « Patrick Lechat : Représentation et codage vidéo de séquences vidéo par maillages 2D déformables, Thèse de doctorat, Université de Rennes 1, pages 130-131,22 Octobre 1999 ». Cette technique de compensation de mouvement avant, illustrée en figure 2A, permet de prédire une image Ic à partir d'au moins une image de référence Iref, en tenant compte de vecteurs de mouvement pointant de l'image de référence Iref vers l'image à prédire Ic, encore appelée image courante. Cette compensation s'effectue en deux étapes :

- l'image de référence Iref est découpée en un ensemble de blocs de référence ;
- pour chaque bloc de référence de l'image de référence, un déplacement est établi, et pour chaque point de ce bloc, on affecte au point de l'image courante Ic la valeur du point de l'image de référence, déplacée du vecteur de mouvement.

En d'autres termes, la projection en avant des vecteurs de mouvement projette le mouvement d'un bloc de l'image de référence Iref sur un bloc déplacé dans l'image courante Ic, dit bloc projeté.

Comme illustré sur cette figure 2A, cette technique de compensation de mouvement avant engendre l'apparition de zones de recouvrement R lorsque plusieurs blocs projetés se chevauchent, ou l'apparition de zones de découvrement D entre les blocs projetés.

Par conséquent, lorsqu'un bloc de l'image courante est situé dans une zone de recouvrement, ce bloc peut se voir affecter plusieurs vecteurs de mouvement. A l'inverse, si un bloc de l'image courante est situé dans une zone de découvrement, aucun vecteur de mouvement n'est affecté à ce bloc.

La figure 2B illustre sous une autre forme la technique de projection en avant du mouvement des blocs B1 à B4 d'une première image de référence Iref0 sur une deuxième image de référence Iref1. Le résultat de la projection en avant des blocs B1 à B4 sur les blocs B1' à B4' d'une image intermédiaire à prédire, encore appelée image courante Ic, est représenté par la projection intermédiaire Pi. Comme illustré sur cette figure 2B, un bloc de l'image courante Ic peut alors se voir affecter plusieurs vecteurs de mouvement de la première image de référence Iref0.

Par exemple, les blocs B2 et B3 de la première image de référence Iref0 se projettent au même endroit dans la deuxième image de référence Iref1. Comme représenté sur la projection intermédiaire Pi, les blocs projetés associés aux blocs B2 et B3 se chevauchent. Dans l'image courante Ic, on peut donc affecter deux vecteurs de mouvement au bloc B2' : un premier vecteur de mouvement représentant le déplacement du bloc B2 dans l'image courante, l'autre le déplacement du bloc B3 dans l'image courante.

On rappelle que classiquement, les vecteurs de mouvement projetés affectés à un bloc de l'image courante doivent préalablement être mis à l'échelle par rapport à la distance temporelle entre l'image courante Ic, l'image de référence arrière Iref0 et l'image par rapport à laquelle le vecteur de mouvement a été calculé (image de référence avant Irefl).

Un inconvénient de cette technique de compensation de mouvement avant réside dans l'absence d'affectation de valeurs dans les zones recouvertes (pour lesquelles plusieurs vecteurs de mouvement sont définis) ou découvertes (pour lesquelles aucun vecteur de mouvement n'est défini), ce qui limite les performances du schéma de codage proposé.

Le champ de mouvement ainsi défini selon cette technique ne permet donc pas de définir de manière directe un champ de mouvement par bloc, tel que défini par le standard de codage AVC.

Pour chaque bloc de l'image courante à prédire, il est pourtant nécessaire de déterminer un vecteur de mouvement, qui pourra par exemple être utilisé pour la compensation de mouvement du bloc lors de la prédiction du bloc dans l'étape de codage.

Afin d'affecter un unique vecteur de mouvement à un bloc courant de l'image à prédire, lorsque celui-ci est recouvert par plusieurs blocs projetés et a donc reçu plusieurs vecteurs de mouvement, il a été proposé de construire un nouveau vecteur de mouvement pour le bloc courant en pondérant les informations obtenues à partir des différents vecteurs de mouvement des blocs projetés.

Un inconvénient de cette technique est sa complexité, puisqu'elle suppose de calculer les différents vecteurs de mouvement qui sont impliqués et de pondérer des informations provenant de différents blocs projetés. De plus, le vecteur de mouvement ainsi construit n'est pas nécessairement adapté pour le codage, s'il ne s'approche pas suffisamment de la trajectoire réelle du bloc courant.

Il a également été proposé d'appliquer un critère de recouvrement maximal pour affecter au bloc courant de l'image à prédire le vecteur de mouvement du bloc projeté recouvrant le plus de pixels du bloc courant. Par exemple, en revenant à la figure 2B, le critère de recouvrement maximal affecte au bloc B2' de l'image courante le vecteur de mouvement issu du déplacement du bloc B3, puisque la projection du bloc B3 dans l'image courante Ic recouvre plus de pixels du bloc B2' que la projection du bloc B2 dans l'image courante Ic.

A nouveau, le vecteur de mouvement ainsi choisi n'est pas nécessairement le mieux adapté pour le codage, s'il ne s'approche pas suffisamment de la trajectoire réelle du bloc courant. De plus, ce critère de recouvrement maximal ne peut pas être mis en oeuvre lorsque les blocs de l'image courante et de l'image de référence ne présentent pas la même taille.

Il existe donc un besoin pour une nouvelle technique de codage/décodage d'images mettant en oeuvre une prédiction par compensation de mouvement avant, permettant d'améliorer ces techniques de l'art antérieur en fournissant, pour au moins certains blocs de l'image à prédire, un vecteur de mouvement bien adapté à la trajectoire réelle de ces blocs.

**3. Exposé de l'invention**

L'invention est définie dans les revendications. Dans la suite, l'expression"mode de réalisation" doit être comprise comme désignant un exemple permettant d'illustrer l'invention, à moins qu'elle ne se réfère précisément à l'invention telle que définie dans les revendications.

L'invention propose une solution nouvelle par rapport à l'art antérieur, sous la forme d'un procédé de codage d'une séquence d'images mettant en oeuvre une étape de prédiction d'au moins une image courante par compensation de mouvement avant à partir d'au moins une image de référence, une telle étape de prédiction mettant en oeuvre, pour au moins un bloc de l'image courante, dit bloc courant, une sous-étape de projection en avant d'au moins un bloc de l'image de référence sur l'image courante, délivrant au moins un bloc projeté recouvrant au moins partiellement le bloc courant, un vecteur de mouvement représentant le déplacement du bloc projeté dans l'image courante, normalisé pour tenir compte d'une distance temporelle entre l'image de référence et l'image courante, dit vecteur de mouvement projeté, étant associé à chaque bloc projeté.

Selon l'invention, l'étape de prédiction met en oeuvre les sous-étapes suivantes, pour le bloc courant précité :

- partitionnement du bloc courant, délivrant au moins un sous-bloc recouvert au moins partiellement par au moins un des blocs projetés, dit sous-bloc recouvert ;
- au moins une itération des étapes suivantes pour au moins un sous-bloc recouvert :

  ◦ vérification que le sous-bloc recouvert respecte un critère d'affectation prédéterminé ;
  ◦ en cas de vérification positive : affectation, au sous-bloc recouvert, d'un des vecteurs de mouvement projetés sélectionné parmi le ou les vecteurs de mouvement projetés associés à ou aux blocs projetés recouvrant au moins partiellement le sous-bloc recouvert ;
  ◦ en cas de vérification négative, et tant qu'une taille minimale prédéterminée n'est pas atteinte pour le sous-bloc recouvert : partitionnement du sous-bloc recouvert, délivrant au moins un nouveau sous-bloc recouvert.

Ainsi, l'invention propose une approche nouvelle et inventive pour l'affectation d'un unique vecteur de mouvement à un bloc ou un sous-bloc d'une image à prédire, lorsque plusieurs vecteurs de mouvement sont disponibles pour ce bloc.

En particulier, l'invention propose de découper ce bloc courant en sous-blocs, afin de travailler au niveau d'un sous-bloc pour sélectionner le vecteur de mouvement le plus proche de la trajectoire réelle du bloc courant. Ceci permet de définir une zone de l'image courante homogène en mouvement, et donc d'affecter un unique vecteur de mouvement à cette zone.

De plus, il est possible selon l'invention de décider de n'affecter aucun vecteur de mouvement à un sous-bloc, lorsque l'on atteint une taille minimale pour le sous-bloc recouvert et qu'il ne respecte pas le critère d'affectation prédéterminé. En effet, on préfère selon l'invention ne pas affecter de vecteur de mouvement à un sous-bloc recouvert, plutôt que lui affecter un vecteur de mouvement non adapté.

Cette taille minimale est par exemple définie dans le codeur. Si le sous-bloc recouvert a atteint cette taille minimale (4x4 par exemple), il n'est plus possible de le re-découper.

Ceci permet de limiter la complexité de la compensation de mouvement. En effet, la compensation de mouvement nécessite classiquement de réaliser une interpolation sous-pixellique dans l'image de référence. En réalisant cette interpolation sous-pixellique sur des zones de l'image courante ayant un même vecteur de mouvement (homogène en mouvement), il est possible de regrouper au maximum les calculs, ce qui permet de gagner en temps de traitement.

De cette façon, lors du codage du bloc courant selon un mode de réalisation de l'invention, la prédiction par compensation de mouvement du bloc est optimale car elle utilise les informations de texture ou de mouvement correspondant à la trajectoire la plus proche de la trajectoire réelle du bloc courant.

Le coût de codage du résidu de texture ou de mouvement s'en trouve donc réduit.

Bien entendu, certains blocs ou sous-blocs de l'image courante peuvent être prédits (et éventuellement codés) selon la technique proposée, alors que d'autres blocs ou sous-blocs de la même image peuvent être prédits (et éventuellement codés) selon une technique classique, comme le mode temporel direct décrit précédemment par exemple.

De même, si aucun vecteur de mouvement n'est affecté à un bloc ou sous-bloc à l'issue du partitionnement itératif selon l'invention (par exemple parce qu'on a atteint une taille minimale pour ce sous-bloc, ou que ce sous-bloc ne répond à aucun critère d'affectation), il est possible d'utiliser une autre technique connue pour la prédiction et éventuellement le codage de ce bloc ou sous-bloc. Une telle technique doit être disponible au codeur (codage intra ou inter classiques par exemple). Ainsi, pour un bloc à coder en mode « inter », il est nécessaire d'affecter un vecteur de mouvement à tous les sous-blocs du bloc.

En particulier, l'invention permet, selon au moins un mode de réalisation, d'affecter un vecteur de mouvement à un bloc de l'image courante quelle que soit la taille des blocs dans l'image de référence et dans l'image courante. Ainsi, il est possible qu'au moins deux blocs de l'image de référence présentent une taille différente, et/ou qu'au moins deux blocs ou sous-blocs de l'image courante présentent une taille différente.

Or l'utilisation de blocs à taille variable permet une prédiction plus fine et donc un gain en compression. L'invention appliquée dans ce contexte permet donc d'améliorer ces gains en compression, et définit ainsi un nouveau mode de codage de bloc plus performant en termes de débit/distorsion.

Afin d'affecter le vecteur de mouvement le plus proche du déplacement réel du bloc courant, on partitionne le bloc courant en sous-blocs, et on considère le ou les sous-blocs recouverts (partiellement ou totalement) par un ou plusieurs blocs projetés.

On traite alors ce sous-bloc recouvert de différentes façons, en tenant compte d'un critère d'affectation prédéterminé appartenant au groupe comprenant :

- le sous-bloc recouvert est recouvert au moins partiellement par un seul des blocs projetés ;
- un nombre prédéterminé de pixels du sous-bloc recouvert est recouvert par un des blocs projetés.

Si aucun de ces critères n'est vérifié pour le sous-bloc recouvert considéré, on partitionne de nouveau ce sous-bloc recouvert, à condition que la taille minimale prédéterminée pour le sous-bloc ne soit pas atteinte.

Sinon, on affecte au sous-bloc recouvert l'un des vecteurs de mouvement projetés sélectionné parmi le ou les vecteurs de mouvement projetés associés à ou aux blocs projetés recouvrant au moins partiellement le sous-bloc recouvert.

Un premier exemple de critère d'affectation prédéterminé est un critère d'unicité du vecteur de mouvement projeté : le sous-bloc recouvert est re-découpé tant qu'il reste recouvert par plusieurs blocs projetés. Lorsque le sous-bloc recouvert n'est recouvert que par un seul bloc projeté, on peut lui affecter le vecteur de mouvement projeté associé à ce bloc projeté. Ceci permet de limiter le nombre d'itérations mises en oeuvre lors de la phase de recherche d'un vecteur de mouvement à affecter au sous-bloc recouvert.

Un deuxième exemple de critère d'affectation prédéterminé est un critère de recouvrement : le sous-bloc recouvert est re-découpé tant qu'il n'est pas recouvert à hauteur d'un certain pourcentage par un bloc projeté. Par exemple, si un bloc ou sous-bloc est majoritairement recouvert par un bloc projeté, on peut alors considérer que le vecteur de mouvement projeté associé au bloc projeté est un vecteur candidat pertinent, et arrêter là la phase de recherche.

Selon un aspect spécifique de l'invention, l'étape d'affectation sélectionne le vecteur de mouvement projeté associé au bloc projeté recouvrant le plus de pixels du sous-bloc recouvert.

Cette sélection peut être effectuée lorsque plusieurs vecteurs de mouvement projetés sont candidats pour un sous-bloc recouvert. Par exemple, cette situation se produit si plusieurs blocs projetés recouvrent majoritairement le sous-bloc recouvert.

Selon une variante, l'étape d'affectation met en oeuvre, pour au moins deux blocs projetés recouvrant au moins partiellement le sous-bloc recouvert auxquels sont associés des vecteurs de mouvement projetés (dits vecteurs candidats) :

- une étape de projection arrière, dans l'image de référence, du sous-bloc recouvert selon chacun des vecteurs candidats, délivrant au moins deux sous-blocs projetés en arrière (un sous-bloc projeté en arrière par vecteur candidat) ;
- pour chaque sous-bloc projeté en arrière, détermination du nombre de pixels de l'image de référence recouverts par le sous-bloc projeté en arrière présentant un vecteur de mouvement similaire au vecteur candidat, délivrant un taux de recouvrement par vecteur candidat ;
- affectation au sous-bloc recouvert du vecteur candidat présentant le meilleur taux de recouvrement.

Cette variante permet de s'assurer de la sélection du vecteur de mouvement projeté le plus proche du mouvement réel du bloc courant, notamment dans le cas où le nombre de pixels (du sous-bloc recouvert) recouverts par des blocs projetés distincts est proche (par exemple 60 % de recouvrement par un premier bloc projeté et 63 % de recouvrement par un deuxième bloc projeté). Selon l'invention, un vecteur de mouvement est similaire à un vecteur candidat dans le cas où le vecteur de mouvement est égal au vecteur candidat ou bien dans le cas où la différence entre le vecteur de mouvement et le vecteur candidat est proche de zéro.

Selon un mode de réalisation de l'invention, le procédé de codage comprend également les étapes suivantes :

- prédiction du bloc courant, en déplaçant le bloc de l'image de référence associé au vecteur de mouvement projeté sélectionné lors de l'étape d'affectation selon le vecteur de mouvement projeté sélectionné, délivrant un bloc prédit ;
- détermination d'au moins un résidu de texture, par comparaison du bloc courant et du bloc prédit ;
- codage du ou des résidus de texture.

L'invention propose ainsi, selon ce mode de réalisation, d'améliorer la technique de codage du mode temporel direct en proposant une prédiction à un bloc courant de l'image courante à prédire calculée à partir d'une compensation de mouvement effectuée à partir du mouvement projeté de plusieurs blocs de l'image de référence.

La prédiction du bloc courant étant faite selon la trajectoire des blocs de l'image de référence la plus proche de la trajectoire réelle du bloc courant, le coût de codage du résidu de texture est réduit.

Selon un autre mode de réalisation, le procédé de codage comprend également les étapes suivantes :

- détermination d'un vecteur de mouvement associé au bloc courant ;
- détermination d'au moins un résidu de vecteur de mouvement, par comparaison du vecteur de mouvement projeté sélectionné et du vecteur de mouvement associé au bloc courant ;
- codage du ou des résidus de vecteur de mouvement.

Selon ce mode de réalisation, l'invention permet de prédire un vecteur de mouvement. On utilise ainsi le vecteur de mouvement projeté sélectionné comme prédicteur du « véritable » vecteur de mouvement du bloc courant, déterminé selon une autre technique connue (comme décrit selon la norme H.264 par exemple).

On détermine alors et on code le résidu de prédiction obtenu en soustrayant le vecteur de mouvement projeté sélectionné au véritable vecteur de mouvement.

En d'autres termes, le codeur peut utiliser le vecteur de mouvement projeté sélectionné pour un bloc courant selon l'invention comme prédiction pour le vecteur de mouvement estimé pour ce bloc courant, afin de réduire le coût de codage de mouvement du bloc.

Le bloc courant peut alors ne pas être codé selon ce mode de codage, mais le vecteur de mouvement projeté sélectionné peut être utilisé pour améliorer les performances d'un autre mode de codage.

En particulier, le procédé de codage comprend une étape de prédiction d'au moins un vecteur de mouvement associé à un bloc voisin du bloc courant dans l'image courante, à partir du vecteur de mouvement projeté sélectionné lors de l'étape d'affectation.

Ainsi, le vecteur de mouvement projeté sélectionné peut être utilisé pour la prédiction des vecteurs de mouvement des blocs voisins. L'invention permet ainsi d'optimiser le coût de codage des vecteurs de mouvement du bloc courant et/ou de ces blocs voisins.

Selon encore un autre mode de réalisation, il est possible de combiner les deux modes de réalisation proposés ci-dessus en déterminant et en codant à la fois un résidu de texture et un résidu de mouvement pour au moins un bloc de l'image courante.

Selon encore un autre mode de réalisation, il est possible de ne coder ni le(s) résidu(s) de texture, ni le(s) résidu(s) de mouvement pour au moins un bloc de l'image courante. Ce mode de codage est encore appelé mode « skip ».

Selon un autre aspect de l'invention, le procédé de codage comprend une étape d'insertion, dans un flux représentatif de la séquence d'images, d'au moins un indicateur représentatif d'un nouveau mode de codage mis en oeuvre pour au moins un bloc (par exemple de taille 64x64) ou sous-bloc (par exemple de taille 16x16) de l'image courante, signalant l'utilisation d'au moins un vecteur de mouvement projeté sélectionné pour le codage du bloc ou sous-bloc,

En particulier, on note que si un bloc est codé en utilisant le nouveau mode de codage, ce nouveau mode de codage s'impose aux sous-blocs issus de ce bloc. Par exemple, si on considère un bloc de taille 16x16, partitionné en quatre sous-blocs de taille 8x8, on cherche à affecter un vecteur de mouvement projeté à chaque sous-bloc issu de ce bloc.

Un tel indicateur peut être inséré dans le flux pour signaler que le nouveau mode de codage s'applique à un ou plusieurs sous-bloc(s), ou bloc(s), ou image(s), voire à l'ensemble de la séquence d'image.

Il est ainsi possible de préciser au niveau du bloc (ou d'un sous-bloc) qu'il est codé dans ce nouveau mode, pour le différentier des modes de codage «inter» et «intra» classiques. Par exemple, un tel indicateur est nommé «INTER_NEW_MODE». Ainsi, chaque bloc de l'image courante peut être codé en utilisant un mode de codage distinct (nouveau mode de codage, mode de codage « intra », mode de codage « inter », ...).

Selon une variante, il est possible de préciser au niveau de la séquence d'images (ou d(une image) que tous les blocs ou sous-blocs sont codés selon une technique connue (« inter », «skip», ...) en utilisant le vecteur de mouvement projeté sélectionné selon l'invention. On utilise donc ce vecteur de mouvement projeté comme prédicteur.

Il est également possible de prévoir au moins un autre indicateur, précisant le type de prédiction mis en oeuvre pour ce bloc ou sous-bloc de l'image courante, appartenant au groupe comprenant :

- un indicateur signalant un codage d'au moins un résidu de vecteur de mouvement pour le bloc ;
- un indicateur signalant un codage d'au moins un résidu de texture pour le bloc ;
- un indicateur signalant une absence de codage du bloc.

De cette façon, un décodeur sait immédiatement, à lecture de cet indicateur :

- si un bloc est codé en utilisant une prédiction de texture mettant en oeuvre une compensation de mouvement à l'aide du vecteur de mouvement projeté sélectionné comme décrit précédemment ; et/ou
- si un bloc est codé en utilisant pour la prédiction de son vecteur de mouvement, le vecteur de mouvement projeté sélectionné comme décrit précédemment ;
- si un bloc n'est pas codé.

Dans un autre mode de réalisation, l'invention concerne un dispositif de codage d'une séquence d'images comprenant des moyens de prédiction d'au moins une image courante par compensation de mouvement avant à partir d'au moins une image de référence, de tels moyens de prédiction comprenant, pour au moins un bloc de l'image courante, dit bloc courant, des moyens de projection en avant d'au moins un bloc de l'image de référence sur l'image courante, délivrant au moins un bloc projeté recouvrant au moins partiellement le bloc courant, un vecteur de mouvement représentant le déplacement du bloc projeté dans l'image courante, normalisé pour tenir compte d'une distance temporelle entre l'image de référence et l'image courante, dit vecteur de mouvement projeté, étant associé à chaque bloc projeté.

Selon l'invention, les moyens de prédiction comprennent, pour le bloc courant précité, des moyens de partitionnement du bloc courant, délivrant au moins un sous-bloc recouvert au moins partiellement par au moins un des blocs projetés, dit sous-bloc recouvert, et comprennent les moyens suivants, activés au moins une fois pour au moins un sous-bloc recouvert sous la forme d'une itération :

  ○ des moyens de vérification que le sous-bloc recouvert respecte un critère d'affectation prédéterminé ;
  ○ des moyens d'affectation, au sous-bloc recouvert, d'un des vecteurs de mouvement projetés sélectionné parmi le ou les vecteurs de mouvement projetés associés à ou aux blocs projetés recouvrant au moins partiellement le sous-bloc recouvert, activés en cas de vérification positive ;

∘ des moyens de partitionnement du sous-bloc recouvert, délivrant au moins un nouveau sous-bloc recouvert, activés en cas de vérification négative et tant qu'une taille minimale prédéterminée n'est pas atteinte pour le sous-bloc recouvert.

Un tel dispositif de codage est notamment adapté à mettre en oeuvre le procédé de codage décrit précédemment. Il s'agit par exemple d'un codeur vidéo de type MPEG ou H.264, ou selon une future norme de compression.

Ce dispositif pourra bien sûr comporter les différentes caractéristiques relatives au procédé de codage selon l'invention. Ainsi, les caractéristiques et avantages de ce codeur sont les mêmes que ceux du procédé de codage, et ne sont pas détaillés plus amplement.

L'invention concerne également un flux représentatif d'une séquence d'images codée selon le procédé de codage décrit précédemment. Un tel flux porte au moins un indicateur représentatif d'un nouveau mode de codage mis en oeuvre pour au moins un bloc ou sous-bloc de l'image courante, signalant l'utilisation d'au moins un vecteur de mouvement projeté sélectionné pour le codage du bloc ou sous-bloc.

Ce flux pourra bien sûr comporter les différentes caractéristiques relatives au procédé de codage selon l'invention.

L'invention concerne également un support d'enregistrement portant un flux tel que décrit précédemment.

Un autre aspect de l'invention concerne un procédé de décodage d'un flux représentatif d'une séquence d'images, mettant en oeuvre une étape de prédiction d'au moins une image à reconstruire par compensation de mouvement avant à partir d'au moins une image de référence, une telle étape de prédiction mettant en oeuvre, pour au moins un bloc de l'image à reconstruire, dit bloc à reconstruire, une sous-étape de projection en avant d'au moins un bloc de l'image de référence sur l'image à reconstruire, délivrant au moins un bloc projeté recouvrant au moins partiellement le bloc à reconstruire, un vecteur de mouvement représentant le déplacement du bloc projeté dans l'image à reconstruire, normalisé pour tenir compte d'une distance temporelle entre l'image de référence et l'image à reconstruire, dit vecteur de mouvement projeté, étant associé à chaque bloc projeté.

Selon l'invention, l'étape de prédiction met en oeuvre les sous-étapes suivantes, pour le bloc à reconstruire précité :

- partitionnement du bloc à reconstruire, délivrant au moins un sous-bloc recouvert au moins partiellement par au moins un des blocs projetés, dit sous-bloc recouvert ;
- au moins une itération des étapes suivantes pour au moins un sous-bloc recouvert :

∘ vérification que le sous-bloc recouvert respecte un critère d'affectation prédéterminé ;
∘ en cas de vérification positive : affectation, au sous-bloc recouvert, d'un des vecteurs de mouvement projetés sélectionné parmi le ou les vecteurs de mouvement projetés associés à ou aux blocs projetés recouvrant au moins partiellement le sous-bloc recouvert ;
∘ en cas de vérification négative, et tant qu'une taille minimale prédéterminée n'est pas atteinte pour le sous-bloc recouvert : partitionnement du sous-bloc recouvert, délivrant au moins un nouveau sous-bloc recouvert.

Un tel procédé de décodage est notamment adapté à décoder une séquence d'images codée selon le procédé de codage précédemment décrit. On effectue de cette façon les mêmes étapes de prédiction qu'au codage, de façon à sélectionner le même vecteur de mouvement projeté qu'au codage.

Par exemple, le décodeur peut lire au moins un indicateur représentatif d'un nouveau mode de codage mis en oeuvre pour au moins un bloc ou sous-bloc de l'image à reconstruire, signalant l'utilisation d'au moins un vecteur de mouvement projeté sélectionné pour le codage du bloc ou sous-bloc.

Il peut également lire au moins un autre indicateur représentatif d'un type de prédiction mis en oeuvre lors du codage du bloc à reconstruire, le ou les indicateurs appartenant au groupe comprenant :

- un indicateur signalant un codage d'au moins un résidu de vecteur de mouvement du bloc ;
- un indicateur signalant un codage d'au moins un résidu de texture du bloc ;
- un indicateur signalant une absence de codage du bloc.

De cette façon, le décodeur sait immédiatement le traitement à effectuer pour décoder le bloc à reconstruire.

Par exemple, lorsque le bloc à reconstruire a été codé en utilisant une prédiction de texture mettant en oeuvre une compensation de mouvement à l'aide du vecteur de mouvement projeté sélectionné, le procédé de décodage met en oeuvre les étapes suivantes :

- prédiction du bloc à reconstruire, en déplaçant le bloc de l'image de référence associé au vecteur de mouvement projeté sélectionné lors de l'étape d'affectation selon le vecteur de mouvement projeté sélectionné, délivrant un bloc prédit ;
- décodage d'au moins un résidu de texture extrait du flux représentatif d'une séquence d'images, obtenu lors du codage de la séquence d'images ;
- reconstruction du bloc à reconstruire, à partir du ou des résidu(s) de texture et du bloc prédit.

Lorsque le bloc à reconstruire a été codé en utilisant pour la prédiction de son vecteur de mouvement le vecteur de mouvement projeté sélectionné, le procédé de décodage met en oeuvre les étapes suivantes :

- détermination d'un vecteur de mouvement associé au bloc à reconstruire ;
- décodage d'au moins un résidu de vecteur de mouvement extrait du flux représentatif d'une séquence d'images, obtenu lors du codage de la séquence d'images ;
- reconstruction du bloc à reconstruire, à partir du ou des résidus de vecteur de mouvement et du vecteur de mouvement associé au bloc à reconstruire.

Il est également possible de décoder à la fois des résidus de mouvement et de texture si ces deux informations ont été codées, ou aucune de ces informations si ni le résidu de texture, ni le résidu de mouvement n'ont été codés pour un bloc.

Un autre aspect de l'invention concerne un dispositif de décodage d'un flux représentatif d'une séquence d'images, comprenant des moyens de prédiction d'au moins une image à reconstruire par compensation de mouvement avant à partir d'au moins une image de référence, de tels moyens de prédiction comprenant, pour au moins un bloc de l'image à reconstruire, dit bloc à reconstruire, des moyens de projection en avant d'au moins un bloc de l'image de référence sur l'image à reconstruire, délivrant au moins un bloc projeté recouvrant au moins partiellement le bloc à reconstruire, un vecteur de mouvement représentant le déplacement du bloc projeté dans l'image à reconstruire, normalisé pour tenir compte d'une distance temporelle entre l'image de référence et l'image à reconstruire, dit vecteur de mouvement projeté, étant associé à chaque bloc projeté.

Selon l'invention, les moyens de prédiction comprennent, pour le bloc à reconstruire précité, des moyens de partitionnement du bloc à reconstruire, délivrant au moins un sous-bloc recouvert au moins partiellement par au moins un des blocs projetés, dit sous-bloc recouvert ;
et comprennent les moyens suivants, activés au moins une fois pour au moins un sous-bloc recouvert sous la forme d'une itération :

    ∘ des moyens de vérification que le sous-bloc recouvert respecte un critère d'affectation prédéterminé ;
    ∘ des moyens d'affectation, au sous-bloc recouvert, d'un des vecteurs de mouvement projetés sélectionné parmi le ou les vecteurs de mouvement projetés associés à ou aux blocs projetés recouvrant au moins partiellement le sous-bloc recouvert, activés en cas de vérification positive ;
    ∘ des moyens de partitionnement du sous-bloc recouvert, délivrant au moins un nouveau sous-bloc recouvert, activés en cas de vérification négative et tant qu'une taille minimale prédéterminée n'est pas atteinte pour le sous-bloc recouvert.

Un tel dispositif de décodage est notamment adapté à mettre en oeuvre le procédé de décodage décrit précédemment. Il s'agit par exemple d'un décodeur vidéo de type MPEG ou H.264, ou selon une future norme de compression.

Ce dispositif pourra bien sûr comporter les différentes caractéristiques relatives au procédé de décodage selon l'invention. Ainsi, les caractéristiques et avantages de ce décodeur sont les mêmes que ceux du procédé de décodage, et ne sont pas détaillés plus amplement.

L'invention concerne encore un programme d'ordinateur comportant des instructions pour la mise en oeuvre d'un procédé de codage et/ou d'un procédé de décodage tels que décrits précédemment, lorsque ce programme est exécuté par un processeur. Un tel programme peut utiliser n'importe quel langage de programmation. Il peut être téléchargé depuis un réseau de communication et/ou enregistré sur un support lisible par ordinateur.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1, décrite en relation avec l'art antérieur, illustre le mode de codage « temporel direct » pour une image de type B ;
- les figures 2A et 2B, également décrites en relation avec l'art antérieur, illustrent la technique de compensation de mouvement avant ;
- la figure 3 présente les principales étapes mises en oeuvre par le procédé de codage selon un mode de réalisation de l'invention ;
- les figures 4A et 4B illustrent un exemple de mise en oeuvre de l'invention ;
- la figure 5 présente les principales étapes mises en oeuvre par le procédé de décodage selon un mode de réalisation de l'invention ;
- les figures 6 et 7 présentent respectivement la structure d'un codeur et d'un décodeur selon un mode de réalisation particulier de l'invention.

## 5. Description d'un mode de réalisation de l'invention

### 5.1 Principe général

Le principe général de l'invention repose sur le partitionnement en sous-blocs d'au moins un bloc d'une image à prédire, pour lequel on ne dispose pas immédiatement d'une information de mouvement. Une telle situation survient notamment lorsque ce bloc de l'image à prédire est recouvert par plusieurs blocs projetés lors d'une projection en avant des blocs d'une image de référence vers l'image à prédire. En effet, plusieurs vecteurs de mouvement représentant le déplacement du bloc projeté dans l'image courante sont alors disponibles pour le bloc de l'image à prédire. Le choix d'un vecteur, de mouvement non optimisé, c'est à dire éloigné de la trajectoire réelle du bloc courant, peut alors conduire à une augmentation du coût de codage de ce bloc.

La solution proposée par l'invention permet d'affecter un vecteur de mouvement optimisé à un bloc ou sous-bloc d'une image à prédire, lorsque plusieurs vecteurs de mouvement sont disponibles pour ce bloc courant. Pour optimiser le choix du vecteur de mouvement, l'invention propose de travailler au niveau des sous-blocs, pour au moins un bloc de l'image à prédire, pour sélectionner le vecteur de mouvement le plus proche de la trajectoire réelle du bloc courant. On réalise pour ce faire plusieurs itérations de partitionnement, jusqu'à atteindre un sous-bloc respectant un critère d'affectation prédéterminé.

Le vecteur de mouvement projeté ainsi sélectionné peut être utilisé de diverses façons au niveau du codage et du décodage, selon le type de prédiction mis en oeuvre.

Par exemple, ce vecteur de mouvement projeté peut être utilisé pour prédire la texture d'un bloc de l'image à prédire, à l'aide d'une compensation de mouvement effectuée à partir de ce vecteur. Ce vecteur de mouvement projeté peut également (ou alternativement) être utilisé comme prédicteur d'un « véritable » vecteur de mouvement du bloc courant, déterminé selon une autre technique connue.

Par la suite, on entend par « sous-bloc » une région d'un bloc de l'image courante obtenue par découpage de ce bloc. Un sous-bloc présente donc une taille inférieure à celle d'un bloc. Par exemple, un bloc de l'image courante présente une taille 64x64, et un sous-bloc une taille 16x16.

Les blocs de l'image de référence peuvent quant à eux être de taille variable. Ainsi, un bloc de l'image de référence peut présenter une taille 64x64, et un autre bloc de l'image de référence peut présenter une taille 16x16.

*5.2 Fonctionnement du codeur*

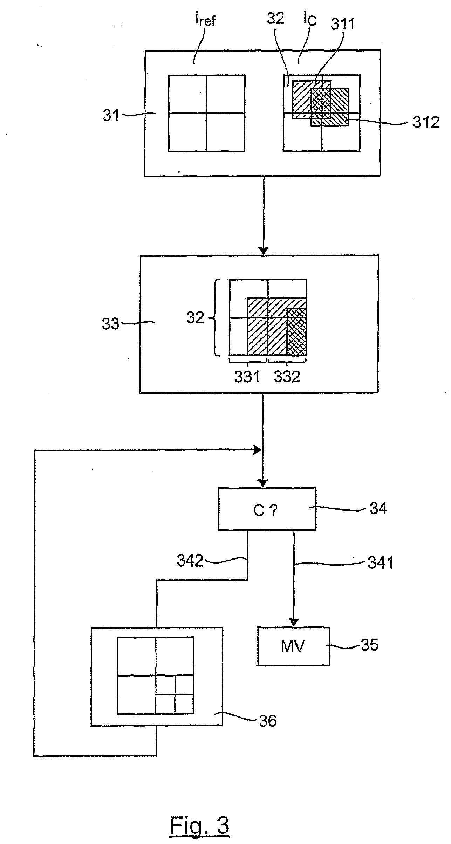

On présente, en relation avec la figure 3, les principales étapes mises en oeuvre pour le codage d'une séquence d'images selon un mode de réalisation particulier de l'invention.

On considère pour ce faire une séquence comprenant au moins une image de référence Iref et une image à prédire par compensation de mouvement avant à partir de l'image de référence, encore appelée image courante Ic.

Selon ce mode de réalisation, on effectue les sous-étapes suivantes pour la prédiction d'au moins un bloc courant 32 de l'image courante Ic.

Au cours d'une première étape 31, on projette en avant au moins un bloc de l'image de référence Iref sur l'image courante Ic. Du fait de la compensation avant, on obtient au moins un bloc projeté (311, 312) recouvrant au moins partiellement le bloc courant 32. Un vecteur de mouvement, dit vecteur de mouvement projeté, est associé à chaque bloc projeté. Un tel vecteur de mouvement projeté représente le déplacement du bloc projeté dans l'image courante Ic, normalisé pour tenir compte d'une distance temporelle entre l'image de référence Iref et l'image courante Ic, comme décrit en relation avec l'art antérieur.

Selon ce mode de réalisation, les blocs de l'image de référence ne présentent pas nécessairement une taille identique. Ainsi, il est possible de projeter, sur l'image courante, le mouvement de blocs de taille variable de l'image de référence.

Au cours d'une étape suivante 33, on partitionne le bloc courant 32 en sous-blocs. On obtient de cette façon au moins un sous-bloc qui est recouvert au moins partiellement par au moins un des blocs projetés, dit sous-bloc recouvert (331, 332).

Pour au moins un sous-bloc recouvert, par exemple le sous-bloc recouvert 332, on met en oeuvre au moins une itération des étapes suivantes :

    o vérification (34) que le sous-bloc recouvert 332 respecte un critère d'affectation prédéterminé ;
    o en cas de vérification positive (341) : on affecte (35) au sous-bloc recouvert 332 l'un des vecteurs de mouvement projetés sélectionné parmi le ou les vecteurs de mouvement projetés associés aux blocs projetés (311, 312) recouvrant au moins partiellement le sous-bloc recouvert 332 ;
    o en cas de vérification négative (342), et tant qu'une taille minimale prédéterminée n'est pas atteinte pour le sous-bloc recouvert: on partitionne 36 le sous-bloc recouvert, délivrant au moins un nouveau sous-bloc recouvert.

En d'autres termes, on partitionne le bloc courant lorsqu'il est recouvert par plusieurs blocs projetés, puis éventuellement les sous-blocs ainsi obtenus lorsqu'ils sont recouverts par plusieurs blocs projetés, jusqu'à atteindre un critère d'affectation prédéterminé. On cherche à déterminer un unique vecteur de mouvement associé à l'image de référence pour le bloc courant (ou pour un sous-bloc du bloc courant). Cette détermination est réalisée au moyen d'un partitionnement itératif du bloc courant en sous-blocs de taille variable, jusqu'à ce qu'une condition d'arrêt soit validée.

Par exemple, ce critère d'affectation prédéterminé appartient au groupe comprenant :

-   le sous-bloc recouvert est recouvert au moins partiellement par un seul des blocs projetés ;

- un nombre prédéterminé de pixels du sous-bloc recouvert est recouvert par un des blocs projetés.

Un premier exemple de critère d'affectation prédéterminé est un critère d'unicité du vecteur de mouvement projeté : le sous-bloc recouvert est re-découpé tant qu'il reste recouvert par plusieurs blocs projetés. Lorsque le sous-bloc recouvert n'est recouvert que par un seul bloc projeté, on peut lui affecter le vecteur de mouvement projeté associé à ce bloc projeté.

Un deuxième exemple de critère d'affectation prédéterminé est un critère de recouvrement : le sous-bloc recouvert est re-découpé tant qu'il n'est pas recouvert à hauteur d'un certain pourcentage par un bloc projeté.

Si ces critères d'affectation ne sont pas respectés, et que l'on a atteint la taille minimale possible pour le sous-bloc, on arrête le partitionnement itératif.

Si le sous-bloc recouvert a atteint une taille minimale et qu'il est toujours recouvert au moins partiellement par plusieurs blocs projetés, plusieurs solutions sont envisageables :

○ soit on sélectionne le vecteur de mouvement projeté associé au bloc projeté couvrant le plus grand nombre de points du sous-bloc recouvert ;
○ soit on n'affecte aucun vecteur de mouvement à ce sous-bloc recouvert.

Dans ce dernier cas, il est possible d'utiliser une autre technique de codage connue si l'on souhaite affecter un vecteur de mouvement à ce sous-bloc.

On décrit ci-après plus en détail l'étape de partitionnement itératif mise en oeuvre pour le codage d'une séquence d'images selon un mode de réalisation particulier de l'invention.

On rappelle qu'on cherche, selon l'invention, à affecter un unique vecteur de mouvement projeté à un bloc ou sous-bloc de l'image courante.

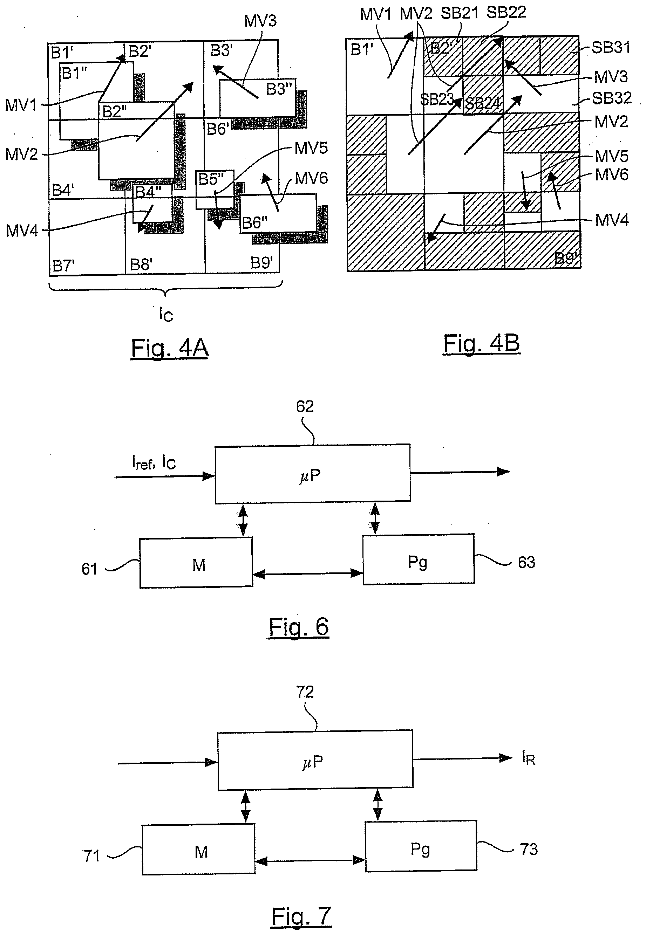

Comme illustré en figures 4A et 4B, on considère par exemple des blocs de taille variable dans l'image de référence Iref et des blocs de taille standard dans l'image courante Ic.

La figure 4A illustre plus précisément l'image courante Ic, comprenant par exemple neuf blocs B1' à B9' de taille 16x16. Ces blocs peuvent être découpés en sous-blocs de taille 16x8, 8x16 ou 8x8. On considère également selon cet exemple une taille minimale des sous-blocs égale à 8x8.

Les blocs B1" à B6", superposés aux blocs B1' à B9' de l'image courante Ic, correspondent aux projections en avant des blocs B1 à B6 de l'image de référence (non représentée). Les blocs B1" à B6" sont encore appelés blocs projetés. Comme illustré sur la figure 4A, ces blocs projetés peuvent être de taille différente.

A chacun de ces blocs projetés est associé un vecteur de mouvement projeté (MV1 à MV6), représentant le déplacement du bloc projeté dans l'image courante mis à l'échelle pour tenir compte d'une distance temporelle entre l'image de référence, l'image courante, et éventuellement une autre image de référence à partir de laquelle le vecteur de mouvement a été calculé (voir figure 1).

On considère par exemple le bloc courant B2' de l'image à prédire Ie, qui est recouvert partiellement par les blocs projetés B1" et B2". Dans l'image courante Ic, on peut donc affecter deux vecteurs de mouvement projetés (MV1 et MV2) au bloc courant B2'.

Afin de sélectionner le meilleur vecteur de mouvement projeté à affecter au bloc courant B2', on propose selon l'invention de partitionner le bloc courant B2' de manière itérative.

Par exemple, au cours de l'étape 33 de partitionnement, le bloc courant B2' est découpé en quatre sous-blocs SB21, SB22, SB23 et SB24 de taille 8x8, comme illustré en figure 4B. D'autres partitionnements peuvent être envisagés. Par exemple, le découpage peut être optimisé afin de déterminer le meilleur partitionnement du bloc. Cette optimisation peut être de conjointement minimiser le nombre de vecteurs de mouvement projetés dans chaque sous-bloc et de maximiser le nombre de points de chaque sous-bloc couvert par chaque vecteur de mouvement projeté dans le sous-bloc.

Selon l'exemple illustré en figure 4A, on constate que le sous-bloc SB21 est partiellement recouvert par le bloc projeté B1", que le sous-bloc SB22 n'est recouvert par aucun bloc projeté, que le sous-bloc SB23 est partiellement recouvert par les blocs projetés B1" et B2", et que le sous-bloc SB24 est partiellement recouvert par le bloc projeté B2".

On cherche alors à affecter un vecteur de mouvement projeté à un des sous-blocs, par exemple au sous-bloc SB23, encore appelé sous-bloc recouvert. En effet, c'est ce sous-bloc qui présente le plus de pixels recouverts par les blocs projetés B1" et B2".

Pour ce faire, on commence par vérifier si l'un des sous-blocs recouverts, par exemple le sous-bloc recouvert SB23 respecte un critère d'affectation prédéterminé, comme un critère de recouvrement, au cours de l'étape 34.

On considère que ce critère est vérifié si un nombre prédéterminé de pixels du sous-bloc recouvert SB23 (ou un pourcentage, par exemple 60%) est recouvert par un des blocs projetés. Comme le bloc projeté B2" recouvre à plus de 60% le sous-bloc recouvert SB23, le critère d'affectation est vérifié (341) pour ce sous-bloc recouvert SB23. On affecte donc (35) le vecteur de mouvement projeté MV2 au sous-bloc recouvert SB23 (les autres sous-blocs SB21 et SB24 ne sont pas suffisamment recouverts pour qu'on affecte un vecteur de mouvement à l'un de ces sous-blocs).

On passe alors au bloc suivant dans l'image courante, noté B3'.

Ce bloc courant B3' est partitionné en deux sous-blocs 8x16, notés SB31 et SB32, au cours de l'étape de partitionnement 33. Seul le sous-bloc SB32 est partiellement recouvert par un bloc projeté, le bloc B3". On vérifie (34) donc que le sous-bloc recouvert SB32 respecte le critère de recouvrement défini ci-dessus. Si tel le cas (341), on affecte (35) le vecteur de mouvement projeté MV3 au sous-bloc recouvert SB32. Sinon (342), on re-découpe (36) le sous-bloc recouvert SB32 en plusieurs sous-blocs, si on n'a pas atteint la taille minimale des sous-blocs, et on réitère les étapes précédentes.

Si plusieurs vecteurs candidats sont toujours possibles pour un sous-bloc recouvert (par exemple parce qu'on a atteint la taille de découpe minimale), on peut sélectionner, selon cet exemple de réalisation, le vecteur de mouvement projeté couvrant le plus grand nombre de points du sous-bloc recouvert (une variante sera décrite par la suite).

Si aucun vecteur candidat n'est disponible pour un sous-bloc recouvert, ou si un sous-bloc n'est pas recouvert par au moins un bloc projeté (comme le sous-bloc SB22 par exemple), on peut choisir de n'affecter aucun vecteur de mouvement à ce sous-bloc, ou bien de lui affecter par défaut le mouvement préalablement associé à un bloc/sous-bloc voisin. Par exemple, on peut affecter au sous-bloc SB22 le mouvement de son sous-bloc voisin SB21).

D'autres critères prédéterminés peuvent être utilisés pour l'affectation des vecteurs de mouvement projeté, comme le critère d'unicité du vecteur de mouvement projeté mentionné précédemment.

Pour résumer, on peut considérer que l'invention, selon ce mode de réalisation, propose une technique de partitionnement adaptatif d'un bloc courant de taille standard de l'image à prédire en un ensemble de sous-blocs présentant une taille non standard ou variable (les sous-blocs ne présentant pas nécessairement la même taille). Cette technique permet d'affecter un vecteur de mouvement projeté à un sous-bloc du bloc courant, ce vecteur de mouvement projeté correspondant à un vecteur de mouvement (mis à l'échelle) d'un bloc de l'image de référence, ce bloc de l'image de référence pouvant présenter une taille différente de celle du sous-bloc.

On note qu'il est également possible d'appliquer ce critère de recouvrement (ou l'un des autres critères mentionnés précédemment) directement à un bloc, sans le partitionner. Par exemple, le bloc B1' de l'image courante n'est pas découpé, et on lui affecte le vecteur de mouvement projeté associé au bloc projeté qui le couvre au mieux (à plus de 60%). Selon notre exemple, on lui affecte le vecteur de mouvement projeté MV1.

De plus, il est possible de ne pas affecter de vecteur de mouvement à un bloc de l'image courante, si aucun des critères mentionnés précédemment n'est respecté. Par exemple, aucun vecteur de mouvement projeté n'est affecté au bloc B7'.

A l'issue de ces étapes, un vecteur de mouvement projeté est défini pour au moins certains blocs de l'image courante.

On décrit ci-après une variante de réalisation, mise en oeuvre lors de l'étape d'affectation 35 d'un vecteur de mouvement projeté, lorsque plusieurs vecteurs candidats sont disponibles.

On se place de nouveau dans l'exemple des figures 4A et 4B, en considérant un critère d'affectation prédéterminé de recouvrement, et plusieurs vecteurs candidats pour le sous-bloc recouvert SB23 du bloc B2'. Par exemple, les vecteurs candidats sont le vecteur de mouvement projeté MV1 (le bloc projeté B1" recouvrant à plus de 60% le sous-bloc recouvert SB23) et le vecteur de mouvement projeté MV2 (le bloc projeté B2" recouvrant lui aussi à plus de 60% le sous-bloc recouvert SB23).

Afin de sélectionner le vecteur candidat qui se rapproche le plus de la trajectoire réelle du sous-bloc recouvert SB23, on met en oeuvre les étapes suivantes, selon cette variante de réalisation :

- projection arrière, dans l'image de référence, du sous-bloc recouvert SB23 selon chacun des vecteurs candidats MV1 et MV2. On obtient alors deux sous-blocs projetés en arrière SB23$^{-MV1}$ et SB23$^{-MV2}$ dans l'image de référence Iref ;
- pour chaque sous-bloc projeté en arrière SB23$^{-MV1}$ et SB23$^{-MV2}$ : on détermine le nombre de pixels de l'image de référence recouverts par le sous-bloc projeté en arrière qui présentent un vecteur de mouvement similaire au vecteur candidat correspondant. Par exemple, le sous-bloc projeté en arrière SB23$^{-MV1}$, associé au vecteur candidat MV1, recouvre à hauteur de 62% une zone de l'image de référence associée au vecteur de mouvement MV1. Le sous-bloc projeté en arrière SB23$^{-MV2}$, associé au vecteur candidat MV2, recouvre à hauteur de 65% une zone de l'image de référence associée au vecteur de mouvement MV2.
- on affecte alors au sous-bloc recouvert SB23 le vecteur candidat présentant le meilleur taux de recouvrement. Selon notre exemple, on affecte donc au sous-bloc recouvert SB23 le vecteur de mouvement projeté MV2.

Cette variante d'implémentation présente de bonnes performances lorsque plusieurs blocs projetés présentent un taux de recouvrement assez proche.

Afin de déterminer le taux de recouvrement associé à chaque vecteur candidat, plusieurs techniques sont possibles :

- soit on compte le nombre de points de l'image de référence, dans le sous-bloc projeté en arrière, ayant exactement le même vecteur de mouvement que le vecteur candidat ;
- soit on calcule une métrique de proximité, en parcourant par exemple tous les points de l'image de référence localisés dans le sous-bloc projeté en arrière, et en leur affectant une valeur égale à 0 ou à 1 en fonction de leur distance au vecteur candidat, de façon à obtenir une mesure de la proximité en sommant ces valeurs. Par exemple, une telle métrique s'exprime sous la forme suivante :

*somme sur les points p présents dans le sous-bloc projeté en arrière associés à la fonction \delta (vecteur candidat-vecteur de mouvement associé au point p),*

où \delta(x) est une fonction monotone décroissante par rapport à l'amplitude du vecteur x (différence entre le vecteur de mouvement projeté en arrière et le vecteur de mouvement associé au point p). Un tel exemple de fonction est par exemple : \delta(x) = 1 si x == 0, sinon \delta(x)=0. Un autre exemple est : \delta(v) = -abs(v.x) - abs(v.y).

On présente ci-après une autre variante d'implémentation permettant d'affecter un unique vecteur de mouvement à un bloc ou sous-bloc de l'image à prédire.

Selon cette variante, on partitionne le bloc courant en un ensemble de sous-blocs présentant chacun une taille minimale. Par exemple, on découpe le bloc courant en sous-blocs de taille 8x8.

Chaque sous-bloc peut être recouvert par un ou plusieurs blocs projetés issus de la projection en avant des blocs de l'image de référence sur l'image courante. On obtient donc un jeu de vecteurs de mouvement sur les sous-blocs.

Les sous-blocs peuvent alors être regroupés, s'ils présentent une caractéristique commune. Par exemple, on regroupe (ou fusionne) les sous-blocs voisins qui sont recouverts par un même bloc projeté, et qui présentent donc un même vecteur de mouvement projeté.

Si un sous-bloc courant est recouvert par plusieurs blocs projetés, on regarde les sous-blocs voisins du sous-bloc courant, et on regroupe ce sous-bloc avec les sous-blocs voisins qui sont recouverts par un des blocs projetés recouvrant le sous-bloc courant.

On reconstruit ainsi un partitionnement adaptatif du bloc courant, en regroupant les sous-blocs présentant une caractéristique commune. De cette façon, on associe un seul vecteur de mouvement projeté à un regroupement de sous-blocs, ce qui permet de lisser le champ de mouvement.

Par ailleurs, comme déjà indiqué, le vecteur de mouvement projeté affecté à un bloc peut être utilisé de diverses manières pour le codage d'une image ou d'une séquence d'images.

Selon un premier exemple, ce vecteur de mouvement projeté peut être utilisé pour la prédiction de la texture du bloc courant, en effectuant une compensation de mouvement à l'aide du vecteur de mouvement et de l'image de référence. Ainsi, il est possible de prédire le bloc courant, en déplaçant le bloc de l'image de référence associé au vecteur de mouvement projeté sélectionné lors de l'étape d'affectation selon le vecteur de mouvement projeté sélectionné, de déterminer au moins un résidu de texture en comparant le bloc courant et le bloc prédit, puis de coder le ou les résidus de texture ainsi obtenus.

Une prédiction bi-directionnelle peut également être mise en oeuvre, en effectuant une deuxième compensation de mouvement en déterminant un deuxième vecteur de mouvement (éventuellement en utilisant la technique proposée selon l'invention) à partir du vecteur de mouvement de l'image de référence et en le mettant à l'échelle par rapport à l'image courante et l'image de référence par rapport à laquelle le vecteur de mouvement a été calculé.

La prédiction ainsi obtenue permet donc de calculer un résidu de texture pour le bloc courant, qui est ensuite transformé, quantifié et transmis à un codeur entropique.

Selon un deuxième exemple, ce vecteur de mouvement projeté peut être utilisé pour la prédiction du vecteur de mouvement estimé du bloc courant. En d'autres termes, on peut utiliser le vecteur de mouvement projeté sélectionné comme prédicteur du « véritable » vecteur de mouvement du bloc courant, déterminé selon une autre technique connue (comme décrit selon la norme H.264 par exemple). Pour ce faire, on détermine un vecteur de mouvement associé au bloc courant en utilisant une technique connue. On détermine ensuite un résidu de vecteur de mouvement, en comparant le vecteur de mouvement projeté sélectionné et le vecteur de mouvement déterminé en utilisant une autre technique. Le résidu de mouvement ainsi obtenu est alors codé pour le bloc courant.

Le mode de codage du bloc courant ainsi proposé peut être mis en compétition avec d'autres modes de codage pour ce bloc courant.

*5.3 Signalisation*

Si on utilise le nouveau mode de codage proposé selon l'invention, il est nécessaire de signaler dans le flux représentatif de la séquence d'images l'utilisation de ce nouveau mode de codage, si l'utilisation de ce nouveau mode de codage n'est pas systématique.

Par exemple, on insère un indicateur « INTER_NEW_MODE », représentatif d'un nouveau mode de codage mis en oeuvre pour au moins un bloc ou sous-bloc d'une image courante, dans le flux représentatif de la séquence d'images codée selon le procédé de codage décrit ci-dessus.

Un tel indicateur peut être inséré dans le flux pour signaler que le nouveau mode de codage s'applique à un ou plusieurs sous-bloc(s), ou bloc(s), ou image(s), voire à l'ensemble de la séquence d'image.

Il est ainsi possible de préciser au niveau du bloc (ou d'un sous-bloc) qu'il est codé dans ce nouveau mode, pour le différentier des modes de codage « inter » et « intra » classiques. Cette signalisation au niveau bloc impose d'utiliser ce mode de codage pour toutes les partitions en sous-blocs de ce bloc. En d'autres termes, on cherche à affecter un vecteur de mouvement projeté déterminé selon l'invention aux sous-blocs issus d'une partition de ce bloc. Si aucun vecteur de mouvement n'est affecté à un sous-bloc à l'issue du partitionnement (par exemple parce qu'on a atteint une taille minimale pour ce sous-bloc ou que ce sous-bloc ne répond à aucun critère d'affectation), il est possible d'utiliser une autre technique connue pour le codage de ce sous-bloc. Par exemple, on affecte à ce sous-bloc un vecteur de mouvement correspondant à un vecteur médian obtenu à partir des sous-blocs voisins de ce sous-bloc.

Selon une variante, ce nouvel indicateur indique, au niveau de la séquence d'images (ou d'une image), que tous les blocs ou sous-blocs sont codés selon une technique connue (« inter », « skip », ...) en utilisant le vecteur de mouvement projeté sélectionné selon l'invention.

De plus, il est possible d'insérer un indicateur représentatif d'un type de prédiction mis en oeuvre pour ce bloc ou sous-bloc.

Par exemple, un tel indicateur peut signaler :

- le codage d'au moins un résidu de vecteur de mouvement pour le bloc (ou signaler le nouveau prédicteur de mouvement utilisé pour le bloc), et/ou
- le codage d'au moins un résidu de texture pour le bloc, ou
- une absence de codage du bloc.

En revanche, les étapes de projection en avant, de partitionnent, et les étapes itératives ne nécessitent pas de signalisation particulière dans le flux. Il suffit que le décodeur applique le même critère d'affectation prédéterminé que le codeur.

*5.4 Fonctionnement du décodeur*

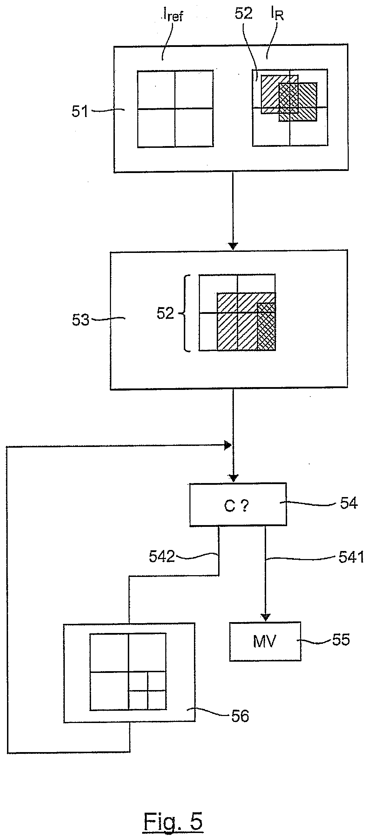

On présente désormais, en relation avec la figure 5, les principales étapes mises en oeuvre pour le décodage d'un flux représentatif d'une séquence d'images selon un mode de réalisation particulier de l'invention.

On considère pour ce faire moins une image de référence Iref (précédemment reconstruite) et une image à reconstruire Ir.

Selon ce mode de réalisation, on effectue les sous-étapes suivantes pour la prédiction d'au moins un bloc de l'image à reconstruire, dit bloc à reconstruire 52 :

- projection en avant (51) d'au moins un bloc de l'image de référence sur l'image à reconstruire, délivrant au moins un bloc projeté recouvrant au moins partiellement le bloc à reconstruire, un vecteur de mouvement représentant le déplacement du bloc projeté dans l'image à reconstruire, normalisé pour tenir compte d'une distance temporelle entre l'image de référence et l'image à reconstruire, dit vecteur de mouvement projeté, étant associé à chaque bloc projeté ;
- partitionnement (53) du bloc à reconstruire, délivrant au moins un sous-bloc recouvert au moins partiellement par au moins un des blocs projetés, dit sous-bloc recouvert ;
- au moins une itération des étapes suivantes pour au moins un sous-bloc recouvert :

  ◦ vérification (54) que le sous-bloc recouvert respecte un critère d'affectation prédéterminé ;
  ◦ en cas de vérification positive (541) : affectation au sous-bloc recouvert d'un des vecteurs de mouvement projetés sélectionné parmi le ou les vecteurs de mouvement projetés associés à ou aux blocs projetés recouvrant au moins partiellement le sous-bloc recouvert ;
  ◦ en cas de vérification négative (542), et tant qu'une taille minimale prédéterminée n'est pas atteinte pour le sous-bloc recouvert : partitionnement (56) du sous-bloc recouvert, délivrant au moins un nouveau sous-bloc recouvert.

Ces étapes sont similaires à celles effectuées au codage, de façon à sélectionner le même vecteur de mouvement projeté qu'au codage. Elles ne sont donc pas décrites plus en détail.

Si un nouveau mode de codage est mis en oeuvre lors du codage de ce bloc à reconstruire (ou d'un sous-bloc), le décodeur sait qu'il doit décoder ce bloc ou sous-bloc de manière spécifique, grâce à la présence de l'indicateur « INTER_NEW_MODE » dans le flux.

En particulier, le type de prédiction mis en oeuvre lors du codage du bloc à reconstruire, peut également être signalé dans le flux, et le décodeur sait le traitement qu'il doit effectuer pour décoder le bloc à reconstruire.

Par exemple, lorsque le bloc à reconstruire a été codé en utilisant une prédiction de texture mettant en oeuvre une compensation de mouvement à l'aide du vecteur de mouvement projeté sélectionné, le procédé de décodage met en oeuvre une prédiction du bloc à reconstruire, en déplaçant le bloc de l'image de référence associé au vecteur de mouvement projeté sélectionné lors de l'étape d'affectation selon le vecteur de mouvement projeté sélectionné, un décodage du ou des résidu(s) de texture extrait(s) du flux, et une reconstruction du bloc à reconstruire, à partir du ou des résidu(s) de texture et du bloc prédit.

Lorsque le bloc à reconstruire a été codé en utilisant pour la prédiction de son vecteur de mouvement le vecteur de mouvement projeté sélectionné, le procédé de décodage met en oeuvre une détermination d'un vecteur de mouvement associé au bloc à reconstruire en utilisant une technique connue, un décodage du ou des résidu(s) de vecteur de mouvement extrait(s) du flux, et une reconstruction du bloc à reconstruire, à partir du ou des résidus de vecteur de mouvement et du vecteur de mouvement associé au bloc à reconstruire.

Il est également possible que le bloc à reconstruire n'ait pas été codé, ou ait été codé à la fois en texture et en mouvement.

Il est par ailleurs possible qu'aucun vecteur de mouvement n'ait été affecté à un bloc ou sous-bloc lors du codage. Dans ce cas, on pourra affecter à ce bloc ou sous-bloc, lors de la reconstruction de l'image, un vecteur de mouvement en utilisant les blocs ou sous-blocs voisins. Par exemple, on affectera à ce bloc ou sous-bloc un vecteur de mouvement correspondant à un vecteur médian, comme effectué classiquement selon le standard AVC.

*5.5 Structure du codeur et du décodeur*

On présente finalement, en relation avec les figures 6 et 7, la structure simplifiée d'un codeur et d'un décodeur mettant respectivement en oeuvre une technique de codage et une technique de décodage selon l'un des modes de réalisation décrits ci-dessus.

Par exemple, le codeur comprend une mémoire 61 constituée d'une mémoire tampon, une unité de traitement 62, équipée par exemple d'un microprocesseur μP, et pilotée par le programme d'ordinateur 63, mettant en oeuvre le procédé de codage selon l'invention.

A l'initialisation, les instructions de code du programme d'ordinateur 63 sont par exemple chargées dans une mémoire RAM avant d'être exécutées par le processeur de l'unité de traitement 62. L'unité de traitement 62 reçoit en entrée au moins une image de référence et une image courante. Le microprocesseur de l'unité de traitement 62 met en oeuvre les étapes du procédé de codage décrit précédemment, selon les instructions du programme d'ordinateur 63, pour affecter un vecteur de mouvement projeté à l'un au moins des blocs de l'image courante. Pour cela, le codeur comprend, outre la mémoire tampon 61, des moyens de projection en avant d'au moins un bloc de l'image de référence sur l'image courante (délivrant un ou plusieurs blocs projetés), des moyens de partitionnement du bloc courant (délivrant au moins un sous-bloc recouvert), des moyens de vérification que le sous-bloc recouvert respecte un critère d'affectation prédéterminé, des moyens d'affectation au sous-bloc recouvert d'un des vecteurs de mouvement projetés et des moyens de partitionnement du sous-bloc recouvert. Ces moyens sont pilotés par le microprocesseur de l'unité de traitement 62.

Le décodeur comprend quant à lui une mémoire 71 constituée d'une mémoire tampon, une unité de traitement 72, équipée par exemple d'un microprocesseur μP, et pilotée par le programme d'ordinateur 73, mettant en oeuvre le procédé de décodage selon l'invention.

A l'initialisation, les instructions de code du programme d'ordinateur 73 sont par exemple chargées dans une mémoire RAM avant d'être exécutées par le processeur de l'unité de traitement 72. L'unité de traitement 72 reçoit en entrée un flux représentatif d'une séquence d'images. Le microprocesseur de l'unité de traitement 72 met en oeuvre les étapes du procédé de décodage décrit précédemment, selon les instructions du programme d'ordinateur 73, pour affecter un vecteur de mouvement projeté à l'un au moins des blocs d'une image à reconstruire. Pour cela, le décodeur comprend, outre la mémoire tampon 71, des moyens de projection en avant d'au moins un bloc de l'image de référence sur l'image à reconstruire (délivrant un ou plusieurs blocs projetés), des moyens de partitionnement du bloc courant (délivrant au moins un sous-bloc recouvert), des moyens de vérification que le sous-bloc recouvert respecte un critère d'affectation prédéterminé, des moyens d'affectation au sous-bloc recouvert d'un des vecteurs de mouvement projetés et des moyens de partitionnement du sous-bloc recouvert. Ces moyens sont pilotés par le microprocesseur de l'unité de traitement 72.

**Revendications**

1.  Procédé de codage d'une séquence d'images mettant en oeuvre une étape de prédiction d'au moins une image courante par compensation de mouvement avant à partir d'au moins une image de référence découpée en blocs de référence, la compensation de mouvement avant étant mise en oeuvre par compensation en mouvement des blocs de référence de l'image de référence sur une autre image à l'aide, pour chaque bloc de référence, d'un vecteur de mouvement établi pour le bloc de référence pointant de l'image de référence vers ladite autre image, ladite étape de prédiction mettant en oeuvre, pour au moins un bloc de ladite image courante, dit bloc courant (32), une sous-étape de projection (31) d'au moins un bloc de référence de l'image de référence sur ladite image courante à l'aide du vecteur de mouvement établi pour le bloc de référence, délivrant au moins un bloc projeté (311, 312) recouvrant au moins partiellement ledit bloc courant, un vecteur de mouvement, dit vecteur de mouvement projeté, représentant le déplacement du bloc projeté dans l'image courante, normalisé pour tenir compte d'une distance temporelle entre ladite image de référence et ladite image courante par rapport à une distance temporelle entre ladite image de référence et ladite autre image, étant associé à chaque bloc projeté, **caractérisé en ce que** ladite étape de prédiction met en oeuvre les sous-étapes suivantes pour ledit bloc courant (32) :

    - partitionnement (33) dudit bloc courant, délivrant au moins un sous-bloc recouvert au moins partiellement par au moins un desdits blocs projetés, dit sous-bloc recouvert (331, 332) ;
    - au moins une itération des étapes suivantes pour au moins un sous-bloc recouvert :
    - vérification (34) que ledit sous-bloc recouvert respecte un critère d'affectation prédéterminé appartenant au groupe comprenant:

- ledit sous-bloc recouvert est recouvert au moins partiellement par un seul desdits blocs projetés,
- un nombre prédéterminé de pixels dudit sous-bloc recouvert est recouvert par un desdits blocs projetés;

o en cas de vérification positive : affectation (35), audit sous-bloc recouvert, d'un desdits vecteurs de mouvement projetés sélectionné parmi le ou les vecteurs de mouvement projetés associés à ou aux blocs projetés recouvrant au moins partiellement ledit sous-bloc recouvert ;

∘ en cas de vérification négative, et tant qu'une taille minimale prédéterminée n'est pas atteinte pour ledit sous-bloc recouvert : partitionnement (36) dudit sous-bloc recouvert, délivrant au moins un nouveau sous-bloc recouvert.

2. Procédé de codage selon la revendication 1, **caractérisé en ce que** ladite étape d'affectation (35) sélectionne le vecteur de mouvement projeté associé au bloc projeté recouvrant le plus de pixels dudit sous-bloc recouvert.

3. Procédé de codage selon la revendication 1, **caractérisé en ce que** ladite étape d'affectation (35) met en oeuvre, pour au moins deux blocs projetés recouvrant au moins partiellement ledit sous-bloc recouvert, auxquels sont associés des vecteurs de mouvement projetés dits vecteurs candidats :

- une étape de projection dudit sous-bloc recouvert de l'image courante sur l'image de référence selon chacun desdits vecteurs candidats, délivrant au moins deux sous-blocs projetés;
- pour chaque sous-bloc projeté selon un vecteur candidat, détermination du nombre de pixels de ladite image de référence recouverts par ledit sous-bloc projeté présentant un vecteur de mouvement égal audit vecteur candidat, délivrant un taux de recouvrement par vecteur candidat ;
- affectation audit sous-bloc recouvert du vecteur candidat présentant le meilleur taux de recouvrement.

4. Procédé de codage selon la revendication 1, **caractérisé en ce qu'**il comprend également les étapes suivantes :

- prédiction d'au moins un sous-bloc du bloc courant associé à un vecteur de mouvement projeté sélectionné, en déplaçant le bloc de l'image de référence associé au vecteur de mouvement projeté sélectionné lors de ladite étape d'affectation selon ledit vecteur de mouvement projeté sélectionné, délivrant un sous-bloc prédit ;
- détermination d'au moins un résidu de texture, par comparaison dudit au moins un sous-bloc et du sous-bloc prédit;
- codage dudit au moins un résidu de texture.

5. Procédé de codage selon la revendication 1 ou la revendication 4, **caractérisé en ce qu'**il comprend également les étapes suivantes pour au moins un sous-bloc des sous-blocs du bloc courant, associé à un vecteur de mouvement projeté :

- détermination d'un vecteur de mouvement associé audit au moins un sous-bloc;
- détermination d'au moins un résidu de vecteur de mouvement, par comparaison dudit vecteur de mouvement projeté sélectionné pour ledit au moins un sous-bloc et dudit vecteur de mouvement déterminé pour ledit au moins un sous-bloc;
- codage dudit au moins un résidu de vecteur de mouvement.

6. Procédé de codage selon la revendication 1, **caractérisé en ce qu'**il comprend une étape d'affectation à un sous-bloc du bloc courant auquel aucun vecteur de mouvement projeté n'a été associé, d'un vecteur de mouvement projeté selectionné pour un bloc ou sous-bloc voisin dudit sous-bloc du bloc courant lors de ladite étape d'affectation (35).

7. Procédé de codage selon la revendication 1, **caractérisé en ce qu'**il comprend une étape d'insertion, dans un flux représentatif de ladite séquence, d'au moins un indicateur représentatif d'un nouveau mode de codage mis en oeuvre pour au moins un bloc ou sous-bloc de l'image courante, signalant l'utilisation d'au moins un vecteur de mouvement projeté sélectionné pour le codage dudit bloc ou sous-bloc.

8. Dispositif de codage d'une séquence d'images comprenant des moyens de prédiction d'au moins une image courante par compensation de mouvement avant à partir d'au moins une image de référence découpée en blocs de référence, la compensation de mouvement avant étant mise en oeuvre par compensation en mouvement des blocs de référence de l'image de référence sur une autre image à l'aide, pour chaque bloc de référence, d'un vecteur de mouvement établi pour le bloc de référence pointant de l'image de référence vers ladite autre image, lesdits moyens de prédiction comprenant, pour au moins un bloc de ladite image courante, dit bloc courant (32), des moyens de projection (31) d'au moins un bloc de référence de l'image de référence sur ladite image courante à l'aide du vecteur de mouvement établi pour le bloc de référence, délivrant au moins un bloc projeté (311, 312) recouvrant au moins partiellement ledit bloc courant, un vecteur de mouvement, dit vecteur de mouvement projeté, représentant le déplacement du bloc projeté dans l'image courante, normalisé pour tenir compte d'une distance temporelle entre ladite image de référence et ladite image courante par rapport à une distance temporelle entre ladite image de référence et ladite autre image, étant associé à chaque bloc projeté,

**caractérisé en ce que** lesdits moyens de prédiction comprennent, pour ledit bloc courant (32), des moyens de partitionnement (33) dudit bloc courant, délivrant au moins un sous-bloc recouvert au moins partiellement par au moins un desdits blocs projetés, dit sous-bloc recouvert (331, 332),

et comprennent les moyens suivants, activés au moins une fois pour au moins un sous-bloc recouvert sous la forme d'une itération :

    - des moyens de vérification (34) que ledit sous-bloc recouvert respecte un critère d'affectation prédéterminé appartenant au groupe comprenant:

        - ledit sous-bloc recouvert est recouvert au moins partiellement par un seul desdits blocs projetés,
        - un nombre prédéterminé de pixels dudit sous-bloc recouvert est recouvert par un desdits blocs projetés ;

        ∘ des moyens d'affectation (35), audit sous-bloc recouvert, d'un desdits vecteurs de mouvement projetés sélectionné parmi le ou les vecteurs de mouvement projetés associés à ou aux blocs projetés recouvrant au moins partiellement ledit sous-bloc recouvert, activés en cas de vérification positive ;
        ∘ des moyens de partitionnement (36) dudit sous-bloc recouvert, délivrant au moins un nouveau sous-bloc recouvert, activés en cas de vérification négative, et tant qu'une taille minimale prédéterminée n'est pas atteinte pour ledit sous-bloc recouvert.

**9.** Procédé de décodage d'un flux représentatif d'une séquence d'images, mettant en oeuvre une étape de prédiction d'au moins une image à reconstruire par compensation de mouvement avant à partir d'au moins une image de référence découpée en blocs de référence, la compensation de mouvement avant étant mise en oeuvre par compensation en mouvement des blocs de référence de l'image de référence sur une autre image à l'aide, pour chaque bloc de référence, d'un vecteur de mouvement établi pour le bloc de référence pointant de l'image de référence vers ladite autre image, ladite étape de prédiction mettant en oeuvre, pour au moins un bloc de ladite image à reconstruire, dit bloc à reconstruire (52), une sous-étape de projection (51) d'au moins un bloc de référence de l'image de référence sur ladite image à reconstruire à l'aide du vecteur de mouvement établi pour le bloc de référence, délivrant au moins un bloc projeté recouvrant au moins partiellement ledit bloc à reconstruire, un vecteur de mouvement, dit vecteur de mouvement projeté, représentant le déplacement du bloc projeté dans l'image à reconstruire, normalisé pour tenir compte d'une distance temporelle entre ladite image de référence et ladite image à reconstruire par rapport à une distance temporelle entre ladite image de référence et ladite autre image, étant associé à chaque bloc projeté,

**caractérisé en ce que** ladite étape de prédiction met en oeuvre les sous-étapes suivantes, pour ledit bloc à reconstruire (52) :

    - partitionnement (53) dudit bloc à reconstruire, délivrant au moins un sous-bloc recouvert au moins partiellement par au moins un desdits blocs projetés, dit sous-bloc recouvert ;
    - au moins une itération des étapes suivantes pour au moins un sous-bloc recouvert :
    - vérification (54)que ledit sous-bloc recouvert respecte un critère d'affectation prédéterminé appartenant au groupe comprenant:

        - ledit sous-bloc recouvert est recouvert au moins partiellement par un seul desdits blocs projetés,
        - un nombre prédéterminé de pixels dudit sous-bloc recouvert est recouvert par un desdits blocs projetés;

        ∘ en cas de vérification positive : affectation (55), audit sous-bloc recouvert, d'un desdits vecteurs de mouvement projetés sélectionné parmi le ou les vecteurs de mouvement projetés associés à ou aux blocs projetés recouvrant au moins partiellement ledit sous-bloc recouvert ;
        ∘ en cas de vérification négative, et tant qu'une taille minimale prédéterminée n'est pas atteinte pour ledit sous-bloc recouvert : partitionnement (56) dudit sous-bloc recouvert, délivrant au moins un nouveau sous-bloc recouvert.

**10.** Procédé de décodage selon la revendication 9, **caractérisé en ce qu'**il met également en oeuvre les étapes suivantes :

- prédiction d'au moins un sous-bloc dudit bloc à reconstruire, ledit sous-bloc étant associé à un vecteur de mouvement projeté sélectionné, en déplaçant le bloc de l'image de référence associé au vecteur de mouvement projeté sélectionné lors de ladite étape d'affectation selon ledit vecteur de mouvement projeté sélectionné, délivrant un sous-bloc prédit ;

- décodage d'au moins un résidu de texture extrait dudit flux représentatif d'une séquence d'images, obtenu lors du codage de ladite séquence d'images ;

- reconstruction dudit sous-bloc dudit bloc à reconstruire, à partir dudit au moins un résidu de texture et du sous-bloc prédit.

11. Procédé de décodage selon l'une quelconque des revendications 9 ou 10, **caractérisé en ce qu'**il met également en oeuvre les étapes suivantes, pour au moins un sous-bloc des sous-blocs du bloc à reconstruire, associé à un vecteur de mouvement projeté :

- détermination d'un vecteur de mouvement associé audit sous-bloc du bloc à reconstruire ;

- décodage d'au moins un résidu de vecteur de mouvement extrait dudit flux représentatif d'une séquence d'images, obtenu lors du codage de ladite séquence d'images ;

- reconstruction dudit sous-bloc du bloc à reconstruire, à partir dudit au moins un résidu de vecteur de mouvement et dudit vecteur de mouvement associé audit sous-bloc du bloc à reconstruire.

12. Dispositif de décodage d'un flux représentatif d'une séquence d'images, comprenant des moyens de prédiction d'au moins une image à reconstruire par compensation de mouvement avant à partir d'au moins une image de référence découpée en blocs de référence, la compensation de mouvement avant étant mise en oeuvre par compensation en mouvement des blocs de référence de l'image de référence sur une autre image à l'aide, pour chaque bloc de référence, d'un vecteur de mouvement établi pour le bloc de référence pointant de l'image de référence vers ladite autre image, lesdits moyens de prédiction comprenant, pour au moins un bloc de ladite image à reconstruire, dit bloc à reconstruire (52), des moyens de projection (51) d'au moins un bloc de référence de l'image de référence sur ladite image à reconstruire à l'aide du vecteur de mouvement établi pour le bloc de référence, délivrant au moins un bloc projeté recouvrant au moins partiellement ledit bloc à reconstruire, un vecteur de mouvement, dit vecteur de mouvement projeté, représentant le déplacement du bloc projeté dans l'image à reconstruire, normalisé pour tenir compte d'une distance temporelle entre ladite image de référence et ladite image à reconstruire par rapport à une distance temporelle entre ladite image de référence et ladite autre image, étant associé à chaque bloc projeté, **caractérisé en ce que** lesdits moyens de prédiction comprennent, pour ledit bloc à reconstruire (52), des moyens de partitionnement (53) dudit bloc à reconstruire, délivrant au moins un sous-bloc recouvert au moins partiellement par au moins un desdits blocs projetés, dit sous-bloc recouvert ; et comprennent les moyens suivants, activés au moins une fois pour au moins un sous-bloc recouvert sous la forme d'une itération :

- des moyens de vérification (54) que ledit sous-bloc recouvert respecte un critère d'affectation prédéterminé appartenant au groupe comprenant:

- ledit sous-bloc recouvert est recouvert au moins partiellement par un seul desdits blocs projetés,
- un nombre prédéterminé de pixels dudit sous-bloc recouvert est recouvert par un desdits blocs projetés ;

  ◦ des moyens d'affectation (55), audit sous-bloc recouvert, d'un desdits vecteurs de mouvement projetés sélectionné parmi le ou les vecteurs de mouvement projetés associés à ou aux blocs projetés recouvrant au moins partiellement ledit sous-bloc recouvert, activés en cas de vérification positive ;
  ◦ des moyens de partitionnement (56) dudit sous-bloc recouvert, délivrant au moins un nouveau sous-bloc recouvert, activés en cas de vérification négative, et tant qu'une taille minimale prédéterminée n'est pas atteinte pour ledit sous-bloc recouvert.

13. Programme d'ordinateur comportant des instructions pour la mise en oeuvre d'un procédé selon la revendication 1 ou selon la revendication 9 lorsque ce programme est exécuté par un processeur.

**Patentansprüche**

1. Verfahren zum Codieren einer Sequenz von Bildern, das einen Schritt zur Vorhersage mindestens eines aktuellen Bildes durch Vorwärtsbewegungskompensation anhand mindestens eines Referenzbildes, das in Referenzblöcke geschnitten ist, ausführt, wobei die Vorwärtsbewegungskompensation durch Bewegungskompensation der Referenzblöcke des Referenzbildes an einem anderen Bild mit Hilfe eines Bewegungsvektors für jeden Referenzblock ausgeführt wird, der für den Referenzblock erstellt wird, der vom Referenzbild zum anderen Bild zeigt, wobei der Vorhersageschritt für mindestens einen Block des aktuellen Bildes, der aktueller Block (32) genannt wird, einen Unterschritt zur Projektion (31) mindestens eines Referenzblocks des Referenzbildes auf das aktuelle Bild mit Hilfe des für den Referenzblock erstellten Bewegungsvektors ausführt, wobei mindestens ein projizierter Block (311, 312) geliefert wird, der zumindest teilweise den aktuellen Block bedeckt, wobei ein Bewegungsvektor, der projizierter Bewegungsvektor genannt wird, der die Verlagerung des projizierten Blocks im aktuellen Bild darstellt, der normiert ist, um einen zeitlichen Abstand zwischen dem Referenzbild und dem aktuellen Bild in Bezug auf einen zeitlichen Abstand zwischen dem Referenzbild und dem anderen Bild zu berücksichtigen, jedem projizierten Block zugeordnet ist,

**dadurch gekennzeichnet, dass** der Schritt der Vorhersage die folgenden Unterschritte für den aktuellen Block (32) ausführt:

- Zerlegung (33) des aktuellen Blocks, wobei mindestens ein Teilblock geliefert wird, der zumindest teilweise durch mindestens einen der projizierten Blöcke bedeckt ist, der bedeckter Block (331, 332) genannt wird;
- mindestens eine Iteration der folgenden Schritte für mindestens einen bedeckten Teilblock:
- Überprüfung (34), dass der bedeckte Teilblock ein vorbestimmtes Zuweisungskriterium einhält, das zur Gruppe gehört, die Folgendes umfasst:

    - der bedeckte Teilblock ist zumindest teilweise durch einen einzigen der projizierten Blöcke bedeckt,
    - eine vorbestimmte Anzahl von Pixeln des bedeckten Teilblocks ist von einem der projizierten Blöcke bedeckt;

    ∘ im Fall einer positiven Überprüfung: Zuweisung (35) eines der projizierten Bewegungsvektoren zum bedeckten Teilblock, der aus dem oder den projizierten Bewegungsvektoren ausgewählt ist, die dem oder den projizierten Blöcken zugeordnet sind, die zumindest teilweise den bedeckten Teilblock bedecken;
    ∘ im Fall einer negativen Überprüfung, solange eine vorbestimmte minimale Größe für den bedeckten Teilblock nicht erreicht wird: Zerlegung (36) des bedeckten Teilblocks, wobei mindestens ein neuer bedeckter Teilblock geliefert wird.

2. Codierverfahren nach Anspruch 1, **dadurch gekennzeichnet, dass** der Zuweisungsschritt (35) den projizierten Bewegungsvektor auswählt, der dem projizierten Block zugeordnet ist, der die meisten Pixel des bedeckten Teilblocks bedeckt.

3. Codierverfahren nach Anspruch 1, **dadurch gekennzeichnet, dass** der Zuweisungsschritt (35) für mindestens zwei projizierte Blöcke, die zumindest teilweise den bedeckten Teilblock bedecken, denen projizierte Bewegungsvektoren zugeordnet sind, die Kandidatenvektoren genannt werden, Folgendes ausführt:

    - einen Schritt zur Projektion des bedeckten Teilblocks des aktuellen Bildes auf das Referenzbild gemäß jedem der Kandidatenvektoren, wobei mindestens zwei projizierte Teilblöcke geliefert werden;
    - für jeden gemäß einem Kandidatenvektor projizierten Teilblock Bestimmung der Anzahl von Pixeln des Referenzbildes, die von dem projizierten Teilblock bedeckt sind, der einen Bewegungsvektor gleich dem Kandidatenvektor aufweist, wobei ein Prozentsatz an Bedeckung durch den Kandidatenvektor geliefert wird;
    - Zuweisung des Kandidatenvektors zum bedeckten Teilblock, der den besten Bedeckungsprozentsatz aufweist.

4. Codierverfahren nach Anspruch 1, **dadurch gekennzeichnet, dass** es auch die folgenden Schritte umfasst:

    - Vorhersage mindestens eines Teilblocks des aktuellen Blocks, der einem ausgewählten projizierten Bewegungsvektor zugeordnet ist, durch Verlagern des Blocks des Referenzbildes, der dem ausgewählten projizierten Bewegungsvektor im Schritt der Zuweisung zugeordnet wird, gemäß dem ausgewählten projizierten Bewegungsvektor, wobei ein vorhergesagter Teilblock geliefert wird;
    - Bestimmung mindestens eines Texturrests durch Vergleich des mindestens einen Teilblocks und des vorhergesagten Teilblocks;
    - Codierung des mindestens einen Texturrests.

5. Codierverfahren nach Anspruch 1 oder Anspruch 4, **dadurch gekennzeichnet, dass** es auch die folgenden Schritte für mindestens einen Teilblock der Teilblöcke des aktuellen Blocks, der einem projizierten Bewegungsvektor zugeordnet ist, umfasst:

    - Bestimmung eines Bewegungsvektors, der dem mindestens einen Teilblock zugeordnet ist;

- Bestimmung mindestens eines Bewegungsvektorrests durch Vergleich des für den mindestens einen Teilblock ausgewählten projizierten Bewegungsvektors und des für den mindestens einen Teilblock bestimmten Bewegungsvektors;

- Codierung des mindestens einen Bewegungsvektorrests.

6. Codierverfahren nach Anspruch 1, **dadurch gekennzeichnet, dass** es einen Schritt zur Zuweisung zu einem Teilblock des aktuellen Blocks, dem kein projizierter Bewegungsvektor zugeordnet wurde, eines für einen benachbarten Block oder Teilblock des Teilblocks des aktuellen Blocks ausgewählten projizierten Bewegungsvektors, im Zuweisungsschritt (35) umfasst.

7. Codierverfahren nach Anspruch 1, **dadurch gekennzeichnet, dass** es einen Schritt zum Einfügen mindestens eines Indikators in einen Fluss, der die Sequenz darstellt, der einen neuen Codiermodus darstellt, der für mindestens einen Block oder Teilblock des aktuellen Bildes ausgeführt wird, der die Verwendung mindestens eines ausgewählten projizierten Bewegungsvektors für die Codierung des Blocks oder Teilblocks signalisiert, umfasst.

8. Vorrichtung zum Codieren einer Sequenz von Bildern mit Mitteln zur Vorhersage mindestens eines aktuellen Bildes durch Vorwärtsbewegungskompensation anhand mindestens eines Referenzbildes, das in Referenzblöcke geschnitten ist, wobei die Vorwärtsbewegungskompensation durch Bewegungskompensation der Referenzblöcke des Referenzbildes an einem anderen Bild mit Hilfe eines für den Referenzblock erstellten Bewegungsvektors für jeden Referenzblock ausgeführt wird, der vom Referenzbild zum anderen Bild zeigt, wobei die Vorhersagemittel für mindestens einen Block des aktuellen Bildes, der aktueller Block (32) genannt wird, Mittel zum Vorhersagen (31) mindestens eines Referenzblocks des Referenzbildes am aktuellen Bild mit Hilfe des für den Referenzblock erstellten Bewegungsvektors umfassen, wobei mindestens ein projizierter Block (311, 312) geliefert wird, der zumindest teilweise den aktuellen Block bedeckt, wobei ein Bewegungsvektor, der projizierter Bewegungsvektor genannt wird, der die Verlagerung des projizierten Blocks im aktuellen Bild darstellt, der normiert ist, um einen zeitlichen Abstand zwischen dem Referenzbild und dem aktuellen Bild in Bezug auf einen zeitlichen Abstand zwischen dem Referenzbild und dem anderen Bild zu berücksichtigen, jedem projizierten Block zugeordnet ist, **dadurch gekennzeichnet, dass** die Vorhersagemittel für den aktuellen Block (32) Mittel zur Zerlegung (33) des aktuellen Blocks umfassen, die mindestens einen Teilblock liefern, der zumindest teilweise durch mindestens einen der projizierten Blöcke bedeckt ist, der bedeckter Teilblock (331, 332) genannt wird, und die folgenden Mittel umfassen, die mindestens einmal für mindestens einen bedeckten Teilblock in Form einer Iteration aktiviert werden:

- Mittel zur Überprüfung (34), dass der bedeckte Teilblock ein vorbestimmtes Zuweisungskriterium einhält, das zur Gruppe gehört, die Folgendes umfasst:

- der bedeckte Teilblock ist zumindest teilweise durch einen einzigen der projizierten Blöcke bedeckt,
- eine vorbestimmte Anzahl von Pixeln des bedeckten Teilblocks ist von einem der projizierten Blöcke bedeckt;

○ Mittel zur Zuweisung (35) eines der projizierten Bewegungsvektoren zum bedeckten Teilblock, der aus dem oder den projizierten Bewegungsvektoren ausgewählt ist, die dem oder den projizierten Blöcken zugeordnet sind, die zumindest teilweise den bedeckten Teilblock bedecken, die im Fall einer positiven Überprüfung aktiviert werden;
○ Mittel zur Zerlegung (36) des bedeckten Teilblocks, die mindestens einen neuen bedeckten Teilblock liefern, die im Fall einer negativen Überprüfung aktiviert werden, solange eine vorbestimmte minimale Größe nicht für den bedeckten Teilblock erreicht wird.

9. Verfahren zum Decodieren eines Flusses, der eine Sequenz von Bildern darstellt, das einen Schritt zur Vorhersage mindestens eines zu rekonstruierenden Bildes durch Vorwärtsbewegungskompensation anhand mindestens eines Referenzbildes, das in Referenzblöcke geschnitten ist, ausführt, wobei die Vorwärtsbewegungskompensation durch Bewegungskompensation der Referenzblöcke des Referenzbildes an einem anderen Bild mit Hilfe eines Bewegungsvektors für jeden Referenzblock, der für den Referenzblock erstellt wird, der vom Referenzbild zum anderen Bild zeigt, ausgeführt wird, wobei der Vorhersageschritt für mindestens einen Block des zu rekonstruierenden Bildes, der zu rekonstruierender Block (52) genannt wird, einen Unterschritt zur Projektion (51) mindestens eines Referenzblocks des Referenzbildes auf das zu rekonstruierende Bild mit Hilfe des für den Referenzblock erstellten Bewegungsvektors ausführt, wobei mindestens ein projizierter Block geliefert wird, der zumindest teilweise den zu rekonstruierenden Block bedeckt, wobei ein Bewegungsvektor, der projizierter Bewegungsvektor genannt wird, der die Verlagerung des projizierten Blocks im zu rekonstruierenden Bild darstellt, der normiert ist, um einen zeitlichen Abstand zwischen dem Referenzbild und dem zu rekonstruierenden Bild in Bezug auf einen zeitlichen Abstand zwischen dem Referenzbild und dem anderen Bild zu berücksichtigen, jedem projizierten Block zugeordnet ist,

**dadurch gekennzeichnet, dass** der Vorhersageschritt die folgenden Unterschritte für den zu rekonstruierenden Block (52) ausführt:

- Zerlegung (53) des zu rekonstruierenden Blocks, wobei mindestens ein Teilblock geliefert wird, der zumindest teilweise durch mindestens einen der projizierten Blöcke bedeckt ist, der bedeckter Teilblock genannt wird;
- mindestens eine Iteration der folgenden Schritte für mindestens einen bedeckten Teilblock:
- Überprüfung (54), dass der bedeckte Teilblock ein vorbestimmtes Zuweisungskriterium einhält, das zur Gruppe gehört, die Folgendes umfasst:

- der bedeckte Teilblock ist zumindest teilweise durch einen einzigen der projizierten Blöcke bedeckt,
- eine vorbestimmte Anzahl von Pixeln des bedeckten Teilblocks ist von einem der projizierten Blöcke bedeckt;

∘ im Fall einer positiven Überprüfung: Zuweisung (55) eines der projizierten Bewegungsvektoren zum bedeckten Teilblock, der aus dem oder den projizierten Bewegungsvektoren ausgewählt ist, die dem oder den projizierten Blöcken zugeordnet sind, die zumindest teilweise den bedeckten Teilblock bedecken;
∘ im Fall einer negativen Überprüfung, solange eine vorbestimmte minimale Größe für den bedeckten Teilblock nicht erreicht wird: Zerlegung (56) des bedeckten Teilblocks, wobei mindestens ein neuer bedeckter Teilblock geliefert wird.

10. Decodierverfahren nach Anspruch 9, **dadurch gekennzeichnet, dass** es auch die folgenden Schritte ausführt:

- Vorhersage mindestens eines Teilblocks des zu rekonstruierenden Blocks, wobei der Teilblock einem ausgewählten projizierten Bewegungsvektor zugeordnet ist, durch Verlagern des Blocks des Referenzbildes, der dem ausgewählten projizierten Bewegungsvektor im Schritt der Zuweisung zugeordnet wird, gemäß dem ausgewählten projizierten Bewegungsvektor, wobei ein vorhergesagter Teilblock geliefert wird;
- Decodieren mindestens eines Texturrests, der aus dem Fluss extrahiert wird, der eine Sequenz von Bildern darstellt, der bei der Codierung der Sequenz von Bildern erhalten wird;
- Rekonstruktion des Teilblocks des zu rekonstruierenden Blocks anhand des mindestens einen Texturrests und des vorhergesagten Teilbocks.

11. Decodierverfahren nach einem der Ansprüche 9 oder 10, **dadurch gekennzeichnet, dass** es auch die folgenden Schritte für mindestens einen Teilblock der Teilblöcke des zu rekonstruierenden Blocks, der einem projizierten Bewegungsvektor zugeordnet ist, ausführt:

- Bestimmung eines Bewegungsvektors, der dem Teilblock des zu rekonstruierenden Blocks zugeordnet ist;
- Decodieren mindestens eines Bewegungsvektorrests, der aus dem Fluss extrahiert wird, der eine Sequenz von Bildern darstellt, der bei der Codierung der Sequenz von Bildern erhalten wird;
- Rekonstruktion des Teilblocks des zu rekonstruierenden Blocks anhand des mindestens einen Bewegungsvektorrests und des Bewegungsvektors, der dem Teilblock des zu rekonstruierenden Blocks zugeordnet ist.

12. Vorrichtung zum Decodieren eines Flusses, der eine Sequenz von Bildern darstellt, die Mittel zur Vorhersage mindestens eines zu rekonstruierenden Bildes durch Vorwärtsbewegungskompensation anhand mindestens eines Referenzbildes, das in Referenzblöcke geschnitten ist, umfasst, wobei die Vorwärtsbewegungskompensation durch Bewegungskompensation der Referenzblöcke des Referenzbildes an einem anderen Bild mit Hilfe eines Bewegungsvektors für jeden Referenzblock, der für den Referenzblock erstellt wird, der vom Referenzbild zum anderen Bild zeigt, ausgeführt wird, wobei die Vorhersagemittel für mindestens einen Block des zu rekonstruierenden Bildes, der zu rekonstruierender Block (52) genannt wird, Mittel zur Projektion (51) von mindestens einem Referenzblock des Referenzbildes auf das zu rekonstruierende Bild mit Hilfe des für den Referenzblock erstellten Bewegungsvektors umfassen, wobei mindestens ein projizierter Block geliefert wird, der zumindest teilweise den zu rekonstruierenden Block bedeckt, wobei ein Bewegungsvektor, der projizierter Bewegungsvektor genannt wird, der die Verlagerung des projizierten Blocks im zu rekonstruierenden Bild darstellt, der normiert ist, um einen zeitlichen Abstand zwischen dem Referenzbild und dem zu rekonstruierenden Bild in Bezug auf einen zeitlichen Abstand zwischen dem Referenzbild und dem anderen Bild zu berücksichtigen, jedem projizierten Block zugeordnet ist,

**dadurch gekennzeichnet, dass** die Vorhersagemittel für den zu rekonstruierenden Block (52) Mittel zur Zerlegung (53) des zu rekonstruierenden Blocks umfassen, die mindestens einen Teilblock liefern, der zumindest teilweise durch mindestens einen der projizierten Blöcke bedeckt ist, der bedeckter Teilblock genannt wird;

und die folgenden Mittel umfassen, die mindestens einmal für mindestens einen bedeckten Teilblock in Form einer Iteration aktiviert werden:

    - Mittel zur Überprüfung (54), dass der bedeckte Teilblock ein vorbestimmtes Zuweisungskriterium einhält, das zur Gruppe gehört, die Folgendes umfasst:

        - der bedeckte Teilblock ist zumindest teilweise durch einen einzigen der projizierten Blöcke bedeckt,
        - eine vorbestimmte Anzahl von Pixeln des bedeckten Teilblocks ist von einem der projizierten Blöcke bedeckt;

        ◦ Mittel zur Zuweisung (55) eines der projizierten Bewegungsvektoren zum bedeckten Teilblock, der aus dem oder den projizierten Bewegungsvektoren ausgewählt ist, die dem oder den projizierten Blöcken zugeordnet sind, die zumindest teilweise den bedeckten Teilblock bedecken, die im Fall einer positiven Überprüfung aktiviert werden;
        ◦ Mittel zur Zerlegung (56) des bedeckten Teilblocks, die mindestens einen neuen bedeckten Teilblock liefern, die im Fall einer negativen Überprüfung aktiviert werden, solange eine vorbestimmte minimale Größe nicht für den bedeckten Teilblock erreicht wird.

13. Computerprogramm mit Befehlen für die Ausführung eines Verfahrens nach Anspruch 1 oder nach Anspruch 9, wenn dieses Programm durch einen Prozessor ausgeführt wird.

**Claims**

1. Method for coding a sequence of images implementing a step of predicting at least one current image by forward motion compensation on the basis of at least one reference image cut up into reference blocks, the forward motion compensation being implemented by motion compensation of the reference blocks of the reference image on another image with the aid, for each reference block, of a motion vector established for the reference block pointing from the reference image to said other image,

said prediction step implementing, for at least one block of said current image, termed current block (32), a sub-step of projection (31) of at least one reference block of the reference image onto said current image with the aid of the motion vector established for the reference block, delivering at least one projected block (311, 312) overlapping at least partially said current block, a motion vector, termed projected motion vector, representing the displacement of the block projected in the current image, normalized to take account of a temporal distance between said reference image and said current image with respect to a temporal distance between said reference image and said other image, being associated with each projected block, **characterized in that** said prediction step implements the following sub-steps for said current block (32):

    - partitioning (33) of said current block, delivering at least one sub-block overlapped at least partially by at least one of said projected blocks, termed overlapped sub-block (331, 332);
    - at least one iteration of the following steps for at least one overlapped sub-block:
    - verification (34) that said overlapped sub-block complies with a predetermined assignment criterion belonging to the group comprising:

        - said overlapped sub-block is at least partially overlapped by a single one of said projected blocks;
        - a predetermined number of pixels of said overlapped sub-block is overlapped by one of said projected blocks;

        ◦ in case of positive verification: assignment (35), to said overlapped sub-block, of one of said projected motion vectors selected from among the projected motion vector or vectors associated with the projected block or blocks overlapping at least partially said overlapped sub-block;
        ◦ in case of negative verification, and as long as a predetermined minimum size is not attained for said overlapped sub-block: partitioning (36) of said overlapped sub-block, delivering at least one new overlapped sub-block.

2. Coding method according to Claim 1, **characterized**

**in that** said step of assignment (35) selects the projected motion vector associated with the projected block overlapping the most pixels of said overlapped sub-block.

3. Coding method according to Claim 1, **characterized in that** said step of assignment (35) implements, for at least two projected blocks overlapping at least partially said overlapped sub-block, with which are associated projected motion vectors termed candidate vectors:

   - a step of projection of said overlapped sub-block of the current image onto the reference image according to each of said candidate vectors, delivering at least two projected sub-blocks;
   - for each sub-block projected according to a candidate vector, determination of the number of pixels of said reference image that are overlapped by said projected sub-block exhibiting a motion vector equal to said candidate vector, delivering a degree of overlap per candidate vector;
   - assignment to said overlapped sub-block of the candidate vector exhibiting the best degree of overlap.

4. Coding method according to Claim 1, **characterized in that** it also comprises the following steps:

   - prediction of at least one sub-block of the current block associated with a projected motion vector selected, by displacing the reference image block associated with the projected motion vector selected during said step of assignment according to said projected motion vector selected, delivering a predicted sub-block;
   - determination of at least one texture residual, by comparison of said at least one sub-block and of the predicted sub-block;
   - coding of said at least one texture residual.

5. Coding method according to Claim 1 or Claim 4, **characterized in that** it also comprises the following steps for at least one sub-block of the sub-blocks of the current block, associated with a projected motion vector:

   - determination of a motion vector associated with said at least one sub-block;
   - determination of at least one motion vector residual, by comparison of said projected motion vector selected for said at least one sub-block and of said motion vector determined for said at least one sub-block;
   - coding of said at least one motion vector residual.

6. Coding method according to Claim 1, **characterized in that** it comprises a step of assignment to a sub-block of the current block with which no projected motion vector has been associated, of a projected motion vector selected for a neighbouring block or sub-block of said sub-block of the current block during said step of assignment (35).

7. Coding method according to Claim 1, **characterized in that** it comprises a step of insertion, into a stream representative of said sequence, of at least one indicator representative of a new mode of coding implemented for at least one block or sub-block of the current image, signalling the use of at least one projected motion vector selected for the coding of said block or sub-block.

8. Device for coding a sequence of images comprising means for predicting at least one current image by forward motion compensation on the basis of at least one reference image cut up into reference blocks, the forward motion compensation being implemented by motion compensation of the reference blocks of the reference image on another image with the aid, for each reference block, of a motion vector established for the reference block pointing from the reference image to said other image, said prediction means comprising, for at least one block of said current image, termed current block (32), means for projecting (31) at least one reference block of the reference image onto said current image with the aid of the motion vector established for the reference block, delivering at least one projected block (311, 312) overlapping at least partially said current block, a motion vector, termed projected motion vector, representing the displacement of the block projected in the current image, normalized to take account of a temporal distance between said reference image and said current image with respect to a temporal distance between said reference image and said other image, being associated with each projected block,
**characterized in that** said prediction means comprise, for said current block (32), means for partitioning (33) said current block, delivering at least one sub-block overlapped at least partially by at least one of said projected blocks, termed overlapped sub-block (331, 332),
and comprise the following means, activated at least once for at least one overlapped sub-block in the form of an iteration:

   - means for verifying (34) that said overlapped sub-block complies with a predetermined assignment criterion belonging to the group comprising:

      - said overlapped sub-block is at least partially overlapped by a single one of said projected blocks;
- a predetermined number of pixels of said overlapped sub-block is overlapped by one of said projected blocks;

◦ means for assigning (35), to said overlapped sub-block, one of said projected motion vectors selected from among the projected motion vector or vectors associated with the projected block or blocks overlapping at least partially said overlapped sub-block, which are activated in case of positive verification;
◦ means for partitioning (36) said overlapped sub-block, delivering at least one new overlapped sub-block, which are activated in case of negative verification, and as long as a predetermined minimum size is not attained for said overlapped sub-block.

9. Method for decoding a stream representative of a sequence of images, implementing a step of predicting at least one image to be reconstructed by forward motion compensation on the basis of at least one reference image cut up into reference blocks, the forward motion compensation being implemented by motion compensation of the reference blocks of the reference image on another image with the aid, for each reference block, of a motion vector established for the reference block pointing from the reference image to said other image, said prediction step implementing, for at least one block of said image to be reconstructed, termed block to be reconstructed (52), a sub-step of projection (51) of at least one reference block of the reference image onto said image to be reconstructed with the aid of the motion vector established for the reference block, delivering at least one projected block overlapping at least partially said block to be reconstructed, a motion vector, termed projected motion vector, representing the displacement of the block projected in the image to be reconstructed, normalized to take account of a temporal distance between said reference image and said image to be reconstructed with respect to a temporal distance between said reference image and said other image, being associated with each projected block,
**characterized in that** said prediction step implements the following sub-steps, for said block to be reconstructed (52):

- partitioning (53) of said block to be reconstructed, delivering at least one sub-block overlapped at least partially by at least one of said projected blocks, termed overlapped sub-block;
- at least one iteration of the following steps for at least one overlapped sub-block:
- verification (54) that said overlapped sub-block complies with a predetermined assignment criterion belonging to the group comprising:

- said overlapped sub-block is at least partially overlapped by a single one of said projected blocks;
- a predetermined number of pixels of said overlapped sub-block is overlapped by one of said projected blocks;

◦ in case of positive verification: assignment (55), to said overlapped sub-block, of one of said projected motion vectors selected from among the projected motion vector or vectors associated with the projected block or blocks overlapping at least partially said overlapped sub-block;
◦ in case of negative verification, and as long as a predetermined minimum size is not attained for said overlapped sub-block: partitioning (56) of said overlapped sub-block, delivering at least one new overlapped sub-block.

10. Decoding method according to Claim 9, **characterized in that** it also implements the following steps:

- prediction of at least one sub-block of said block to be reconstructed, said sub-block being associated with a projected motion vector selected, by displacing the reference image block associated with the projected motion vector selected during said step of assignment according to said projected motion vector selected, delivering a predicted sub-block;
- decoding of at least one texture residual extracted from said stream representative of a sequence of images and obtained during the coding of said sequence of images;
- reconstruction of said sub-block of said block to be reconstructed, on the basis of said at least one texture residual and of the predicted sub-block.

11. Decoding method according to either one of Claims 9 and 10, **characterized in that** it also implements the following steps, for at least one sub-block of the sub-blocks of the block to be reconstructed, associated with a projected motion vector:

- determination of a motion vector associated with said sub-block of the block to be reconstructed;
- decoding of at least one motion vector residual extracted from said stream representative of a sequence of images and obtained during the coding of said sequence of images;

- reconstruction of said sub-block of the block to be reconstructed, on the basis of said at least one motion vector residual and of said motion vector associated with said sub-block of the block to be reconstructed.

12. Device for decoding a stream representative of a sequence of images, comprising means for predicting at least one image to be reconstructed by forward motion compensation on the basis of at least one reference image cut up into reference blocks, the forward motion compensation being implemented by motion compensation of the reference blocks of the reference image on another image with the aid, for each reference block, of a motion vector established for the reference block pointing from the reference image to said other image, said prediction means comprising, for at least one block of said image to be reconstructed, termed block to be reconstructed (52), means for projecting (51) at least one reference block of the reference image onto said image to be reconstructed with the aid of the motion vector established for the reference block, delivering at least one projected block overlapping at least partially said block to be reconstructed, a motion vector, termed projected motion vector, representing the displacement of the block projected in the image to be reconstructed, normalized to take account of a temporal distance between said reference image and said image to be reconstructed with respect to a temporal distance between said reference image and said other image, being associated with each projected block,

**characterized in that** said prediction means comprise, for said block to be reconstructed (52), means for partitioning (53) said block to be reconstructed, delivering at least one sub-block overlapped at least partially by at least one of said projected blocks, termed overlapped sub-block;

and comprise the following means, activated at least once for at least one overlapped sub-block in the form of an iteration:

- means for verifying (54) that said overlapped sub-block complies with a predetermined assignment criterion belonging to the group comprising:

- said overlapped sub-block is at least partially overlapped by a single one of said projected blocks;
- a predetermined number of pixels of said overlapped sub-block is overlapped by one of said projected blocks;

∘ means for assigning (55), to said overlapped sub-block, one of said projected motion vectors selected from among the projected motion vector or vectors associated with the projected block or blocks overlapping at least partially said overlapped sub-block, which are activated in case of positive verification;

∘ means for partitioning (56) said overlapped sub-block, delivering at least one new overlapped sub-block, which are activated in case of negative verification, and as long as a predetermined minimum size is not attained for said overlapped sub-block.

13. Computer program comprising instructions for the implementation of a method according to Claim 1 or according to Claim 9 when this program is executed by a processor.

Fig. 1

Fig. 2A

Fig. 2B

Fig. 3

Fig. 4A

Fig. 4B

Fig. 6

Fig. 7

Fig. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Représentation et codage vidéo de séquences vidéo par maillages 2D déformables. **PATRICK LECHAT.** Thèse de doctorat. Université de Rennes, 22 Octobre 1999, vol. 1, 130-131